(19) Europäisches Patentamt
European Patent Office
Office européen des brevets

(11) EP 2 690 147 A2

(12) **EUROPÄISCHE PATENTANMELDUNG**

(43) Veröffentlichungstag:
**29.01.2014 Patentblatt 2014/05**

(51) Int Cl.:
***C09J 7/02** (2006.01)*

(21) Anmeldenummer: **13176611.5**

(22) Anmeldetag: **16.07.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **23.07.2012 DE 102012212883**

(71) Anmelder: **tesa AG**
**20253 Hamburg (DE)**

(72) Erfinder:
- **Bai, Minyoung**
  **22529 Hamburg (DE)**
- **Krawinkel, Thorsten**
  **22457 Hamburg (DE)**
- **Prenzel, Alexander, Dr.**
  **20259 Hamburg (DE)**

(54) **Geschäumtes Klebeband zur Verklebung auf unpolaren Oberflächen**

(57) Die Erfindung betrifft ein Klebeband mit einem Trägermaterial aus einer acrylatbasierten Schaumschicht, auf die mindestens eine Haftklebemasseschicht aufgebracht ist, wobei die Haftklebemasse
(a) sich aus einem Gemisch aus zumindest zwei unterschiedlichen Synthesekautschuken, insbesondere auf Basis von Vinylaromatenblockcopolymeren, zusammensetzt,
(b) ein Harz enthält, welches nicht in den die Schaumschicht bildenden Acrylaten löslich ist und
(c) chemisch unvernetzt ist.

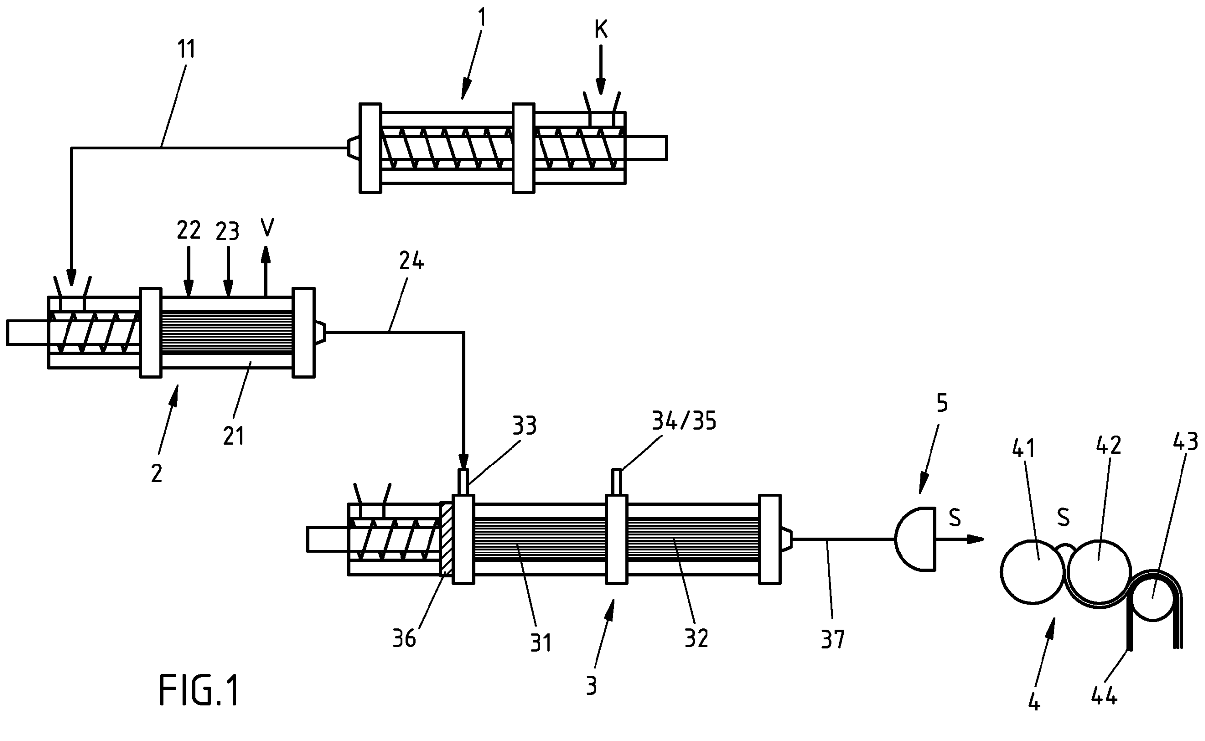


FIG.1

EP 2 690 147 A2

## Beschreibung

Die vorliegende Erfindung betrifft ein Haftklebeband, bestehend aus einer viskoelastischen acrylatbasierten Schaumschicht und mindestens einer Haftklebemasseschicht, wobei die Haftklebemasseschicht sich aus einem Gemisch aus Synthesekautschuken zusammensetzt. Weiterhin umfasst die Erfindung Verfahren zur Herstellung und Anwendungen eines solchen Klebebandproduktes.

Klebstoffe und Klebebänder werden im Allgemeinen verwendet, um zwei Substrate zusammenzufügen, so dass eine dauerhafte oder permanente Verbindung entsteht. Spezielle Klebebandprodukte weisen eine Schaumschicht auf und werden beispielsweise in der Automobilindustrie zur permanenten Verklebung von Bauteilen an der Karosserie oder im Motorbereich verwendet. Typische Beispiele hierfür sind die Emblemverklebung sowie das Fixieren von Kunststoffteilen und Gummitürdichtungen.

Beispiele für derartige Haftklebebänder sind in der WO 2008/070386 A1, in der US 6,503,621 A und in der US 4,415,615 A offenbart.

Trotz einer Vielzahl an Klebstoffen und Klebebändern ist aufgrund von neuartigen Substraten sowie steigenden Anforderungen bei der Endanwendung die Notwendigkeit gegeben, neue Haftklebemassen, Formulierungen und Klebebanddesigns zu entwickeln. So hat sich herausgestellt, dass gerade Neuentwicklungen im Bereich der Automobilfarben und -lacke, auf denen Klebebänder temporär oder permanent haften sollen, kritische Oberflächen sind und eine Herausforderung für die Verklebung darstellen. Aufgrund der niedrigen Oberflächenenergie dieser Lacke und Farben werden speziell für diese Anwendungen designte Klebebänder benötigt.

Weiterhin steigt die Verwendung von Klebebändern aufgrund des fortlaufenden Trends im Transportsektor und insbesondere in der Automobilindustrie, das Gewicht zum Beispiel eines Autos weiter zu verringern und somit den Kraftstoffverbrauch zu reduzieren. Dies führt dazu, dass Klebebänder für Anwendungen verwendet werden, für die bisherige Klebebandprodukte nicht vorhergesehen und entwickelt waren, und es kommen zusätzlich zu der mechanischen Belastung und den für Klebeanwendungen kritischen Haftuntergründen auch noch steigende Anforderungen gerade für permanente Verklebungen hinsichtlich der UV- und Bewitterungsstabilität.

Folglich existiert die Anforderung an ein Klebebandprodukt, zum einen eine verbesserte Haftung auf niedrigenergetischen Oberflächen wie Automobilfarben und -lacken aufzuweisen und zum anderen auch unter extremen klimatischen Bedingungen ein hervorragendes Leistungsprofil zu bewahren. Kälteschlagfestigkeit und eine ausreichende Kohäsion auch bei hohen Temperaturen werden gerade bei permanenten Außenverklebungen (Embleme, Stoßdämpfer) von der Automobilindustrie gefordert.

Zusätzlich muss das Klebeband auch den Herstellungsprozessen gerecht werden. Aufgrund fortschreitender Automatisierung von Produktionsprozessen sowie des Wunsches nach ökonomischeren Fertigungsweisen muss das Klebeband sobald es an der richtigen Stelle platziert ist, eine genügend hohe Adhäsion aufweisen und teilweise auch hohe Scherkräfte aushalten. Hierzu ist es von Vorteil, wenn die Klebebänder einen hohen Tack zeigen und die Klebemassen auf diversen Untergründen schnell auffließen, so dass in kürzester Zeit eine gute Benetzung und somit hohe Klebkräfte erreicht werden.

Da gerade der letzte Punkt, nämlich das schnelle Erreichen konstanter Klebkräfte, somit eine geringe Tendenz zum Auffließen auf diversen Oberflächen, schwer mit harzmodifizierten Acrylat- oder Reinacrylathaftklebemassen erreichbar ist, werden stattdessen häufig Synthesekautschuke oder Blends mit Synthesekautschuken als geeignete Materialien zur Verklebung auf unpolaren Oberflächen beschrieben. Die EP 0 349 216 A1 und EP 0 352 901 A1 beschreiben zweiphasige Blends bestehend aus einem Polyacrylat und einem Synthesekautschuk, bevorzugt einem Styrolblockcopolymer, welche besonders für die Verklebung auf Farben und Lacken ausgelobt werden. Blendsysteme können jedoch den Nachteil aufweisen, dass sich die Morphologie des Blends über die Zeit und/oder mit steigender Temperatur ändern kann, was sich in einer makroskopischen Änderung der Polymer- beziehungsweise Produkteigenschaft äußert. Weiterhin kann es im Extremfall zu einer kompletten Entmischung der Polymerkomponenten kommen, und einige Blendkomponenten können sich mit der Zeit an Oberflächen anreichern, wodurch sich die Adhäsion ändern kann. Da generell ein großer Aufwand betrieben werden muss, zum Beispiel durch den Einsatz von Kompatibilisatoren wie in der US 6,379,791 A offenbart, um thermisch und langzeitstabile Blends für Klebeanwendungen herzustellen, sind diese Blendsysteme nicht von Vorteil.

Die EP 2 226 369 A1 beschreibt ein Klebeband, welches einen viskoelastischen Acrylatschaumträger aufweist, der mit mindestens einer Haftklebemasseschicht kaschiert ist. Die Haftklebemasse basiert auf einem chemisch vernetzten Kautschuk, bevorzugt einem mittels Elektronenstrahlhärtung vernetzten Synthesekautschuk. Die dort beschriebenen Klebebänder zeigen sowohl gute Klebkräfte auf verschiedenen Farb- und Lackschichten als auch eine ausreichende Kohäsion bei hohen Temperaturen. Doch zeigt sich eindeutig, dass diese Klebebänder ein stark ausgeprägtes Aufziehverhalten zeigen, wodurch die geforderten hohen Endfestigkeiten erst nach einigen Tagen erreicht werden. Somit ist ein solches Klebeband nicht für schnelle Herstellprozesse geeignet.

Aufgabe der Erfindung ist es daher, ein Klebeband aus einem Trägermaterial und einer zumindest einseitig auf dem Trägermaterial aufgebrachten Haftklebemasse zu schaffen, das eine gute Haftung auf niedrigenergetischen

Oberflächen wie Automobilfarben und -lacken aufweist, das kälteschlagfest ist und das eine ausreichende Kohäsion auch bei hohen Temperaturen aufweist.

Gelöst wird diese Aufgabe durch ein Klebeband, wie es im Hauptanspruch niedergelegt ist. Gegenstand der Unteransprüche sind vorteilhafte Fortbildungen des Erfindungsgegenstandes. Des Weiteren umfasst die Erfindung Verfahren zur Herstellung sowie die Verwendung dieses Klebebandes.

Demgemäß betrifft die Erfindung ein Klebeband mit einem Trägermaterial aus einer acrylatbasierten, vorzugsweise viskoelastischen Schaumschicht, auf die mindestens eine Haftklebemasseschicht aufgebracht ist, wobei die Haftklebemasse

(a) sich aus einem Gemisch aus zumindest zwei unterschiedlichen Synthesekautschuken, insbesondere auf Basis von Vinylaromatenblockcopolymeren, zusammensetzt,
(b) ein Harz enthält, welches nicht in den die Schaumschicht bildenden Acrylaten löslich ist und
(c) chemisch unvernetzt ist.

Viskoelastizität ist ein charakteristisches Materialverhalten in dem Sinne, dass neben Merkmalen der reinen Elastizität auch noch jene einer viskosen (Viskosität) Flüssigkeit vorhanden sind, was sich zum Beispiel im Auftreten innerer Reibung bei Deformationen zeigt. Bei plötzlich einsetzender Belastung, zum Beispiel punktuellem Druck auf eine Lackschicht, zeigt sich Viskoelastizität dadurch, dass die Verformung erst mit einer gewissen zeitlichen Verzögerung (Retardation = kalter Fluss) eintritt. In Analogie dazu nimmt die Lackschicht auch nach plötzlicher Belastungswegnahme erst allmählich wieder die ursprüngliche Gestalt an (Relaxation). Das Relaxationsverhalten von viskoelastischen festen Kunststoffen kann mithilfe des Kriech-Erholungs-Test gemessen werden.

Das Ausmaß der Viskoelastizität ist abhängig von der Temperatur, wobei die Glasübergangstemperatur von Bedeutung ist. Bei periodischer Belastung ist auch die Frequenz dafür maßgebend, wie sich die Viskoelastizität des Lackmaterials bemerkbar macht. Bei schnellem Wechsel dominiert der elastische, bei langsamem der viskose Charakter des Materials.

Überraschend wurde gefunden, dass es gerade hinsichtlich des schnellen Erreichens der Endverklebungsfestigkeit besonders von Vorteil ist, eine chemisch unvernetzte Haftklebemasse basierend auf einem Synthesekautschuk, insbesondere einem Gemisch aus Vinylaromatenblockcopolymeren, in Kombination mit einem viskoelastischen Acrylatschaumträger zu verwenden. Auf der anderen Seite können dennoch hohe Scherfestigkeiten und eine gute Temperaturbeständigkeit erzielt werden. Somit erfüllt das erfindungsgemäße Klebeband jede der beschriebenen Anforderungen.

Die Formulierung chemisch unvernetzt wird im Folgenden zur Abgrenzung von einem physikalischen oder einem reversibel-chemischen Netzwerk verwendet, welches Synthesekautschuke basierend auf einer Vinylaromatenblockcopolymerstruktur ausbilden können. "Chemisch unvernetzt" besagt, dass ein kovalent-chemisches Netzwerk explizit nicht im erfinderischen Sinne ist, dass jedoch auf der anderen Seite ein physikalisches und ein reversibel-chemisches Netzwerk umfasst sein kann. Das kovalent-chemische Netzwerk umfasst alle dem Fachmann denkbaren Arten der chemischen Vernetzung, die unter Ausbildung kovalenter und/oder koordinativer Bindungen entstehen. Weiterhin umfasst die chemische Vernetzung auch alle physikalischen Methoden, die chemisch reaktive Gruppen erzeugen, die dann im Anschluss zu einer kovalenten und/oder koordinativen Bindung zwischen zwei Polymerketten und somit zu einem kovalentchemischen Netzwerk führen. Beispiele hierfür sind die Elektronenstrahlhärtung und UV-Vernetzung.

Um eine ausreichende Stabilität von Klebemassen gegen hohe Temperaturen, Lösungsmittel und andere Einflüsse zu gewährleisten, ist es dem Fachmann geläufig, beispielsweise chemisch/thermische Vernetzungsverfahren sowie UV-Strahlung oder Elektronenstrahlung einsetzende Verfahren anzuwenden. Diese Verfahren führen zur Ausbildung einer kovalenten Vernetzung. Unter anderem sind derartige Verfahren in der in EP 2 226 369 A1 oder der US 2004/0299000 A1 beschrieben.

Wenn im Rahmen der Offenbarung die Rede davon ist, dass eine Klebemasse, insbesondere die erfindungsgemäße Haftklebemasse auf einer der Oberflächen des Trägerschaums aufgebracht ist, so kann sich die Klebemasse unmittelbar auf der Oberfläche befinden. Es ist erfindungsgemäß, wenn zwischen Klebemasse und Schaumoberfläche eine oder mehrere chemische, die Adhäsion verbessernde Haftvermittlerschichten (Primerschichten) vorhanden sind. Haftvermittler sind Substanzen, die durch eine Erhöhung der Benetzbarkeit der Substratoberfläche und die Möglichkeit, chemische Bindungen zwischen der Substratoberfläche und des aufzubringenden Materials, in diesem Fall der Haftklebemasse, auszubilden, die Haftfestigkeit von Verbünden erhöhen. Weiterhin liegt es im Rahmen der Erfindung, wenn die Oberfläche der Klebemassenschicht und/oder die Oberfläche des Schaumträgers durch eine physikalische Vorbehandlung wie zum Beispiel Corona-, Flammen- oder Plasmabehandlung verändert werden.

Andere als die genannten Schichten sind erfindungsgemäß ausgeschlossen.

Der Begriff "Haftklebemasse" beschreibt im Rahmen der Erfindung Materialien (zum Beispiel Elastomere), die entweder inhärent klebrig sind, oder durch das Hinzufügung von klebrigmachenden Harzen ("Tackifier") so formuliert werden, dass sie klebrig sind. Gemäß der vorliegenden Erfindung umfassen Haftkleber und/oder Haftklebeprodukte Materialien und/oder Fertigprodukte, die durch eines der allgemein bekannten Verfahren zur Bestimmung von Haftklebern als solche eingestuft werden. Insbesondere sind solche Materialien und/oder Fertigprodukte gemeint, die durch eines oder mehrere der folgenden Verfahren als Haftkleber eingestuft werden können. Entsprechend einem ersten Verfahren werden Haftkleber durch die Dahlquist-Kriterien definiert, die im D. Satas, Handbook of Pressure Sensitive Adhesives, 2nd Edition, Seite 172, 1989 beschrieben werden. Ein Material wird gemäß eines dieser Kriterien als ein guter Haftkleber definiert, wenn es bei Anwendungstemperatur ein Elastizitätsmodul (gemessen nach der später ausführlich erläuterten Methode H6) von kleiner als $1*10^6$ Pa aufweist.

Gemäß dem "Glossary of Terms Used in the Pressure Sensitive Tape Industry", die im August 1985 vom Pressure Sensitive Tape Council herausgegeben wurden, ist eine Haftklebemasse dadurch gekennzeichnet (und kann somit als solche bestimmt werden), dass sie bei Raumtemperatur einen aggressiven und permanenten Tack aufweist und auf einer Vielzahl unterschiedlicher Oberflächen nach bloßem Kontakt ohne weitere Anwendung größeren Drucks als beim Befestigen mit dem Finger oder mit der Hand fest verklebt.

Eine weitere geeignete Methode zur Bestimmung von Haftklebemassen ist, dass sie vorzugsweise bei Raumtemperatur (25 °C) innerhalb folgender mittels Frequenz-Sweep gemessener Speichermodulbereiche liegt: innerhalb eines Bereiches von $2*10^5$ bis $4*10^5$ Pa bei einer Frequenz von 0,1 rad/sec (0,017 Hz) und innerhalb eines Modulbereiches von $2*10^6$ bis $8*10^6$ Pa bei einer Frequenz von 100 rad/sec (17 Hz) (dargestellt zum Beispiel in der Tabelle 8-16 in D. Satas Handbook of Pressure Sensitive Adhesive Technology, 2nd Edition, Seite 173, 1989).

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Das Klebeband kann in festen Längen wie zum Beispiel als Meterware, in Form von scheibenförmigen Rollen (archimedische Spirale) oder aber als "Endlosware" auf Rollen (so genannte SAF-Rollen) zur Verfügung gestellt werden.

Im Folgenden nimmt die Erfindung ausführlicher Bezug auf besondere Ausführungsformen, ohne jedoch die Erfindung auf diese zu beschränken.

Viskoelastischer Schaumträger

Gemäß einer bevorzugten Ausführungsform bildet ein syntaktischer Schaum den insbesondere viskoelastischen Schaumträger. Bei einem syntaktischen Schaum sind Glaskugeln oder keramische Hohlkugeln (Mikrokugeln) oder Mikroballons in einer Polymermatrix eingebunden. Dadurch sind bei einem syntaktischen Schaum die Hohlräume voneinander getrennt und die in den Hohlräumen befindlichen Substanzen (Gas, Luft) durch eine Membran von der umgebenden Matrix abgetrennt. Dadurch ist das Material wesentlich stärker als herkömmliche Schäume mit unverstärkten Gaseinschlüssen.

Die viskoelastischen Schaumträger des erfindungsgemäßen Klebebands, die mittels der später dargestellten erfindungsgemäßen Verfahren hergestellt werden, können neben dem erfindungsgemäß vorgesehenen Polyacrylat alle dem Fachmann bekannten Polymere und/oder Mischungen aus Polymeren umfassen.

Bevorzugt besteht der Schaumträger nur aus Polyacrylat als Gerüstpolymer.

Das Polyacrylat ist bevorzugt durch eine freie oder kontrollierte radikalische Polymerisation einer oder mehrerer (Meth)Acrylsäuren oder (Meth)Acrylsäureester erhältlich und wird besonders bevorzugt thermisch vernetzt, um - gerade im Falle dicker Schaumträgerschichten - einen Vernetzungsgradienten zu verhindern, welcher zwangsläufig aus einem photochemischen Vernetzungsverfahren oder einer Elektronenstrahlvernetzung resultiert.

In einer bevorzugten Variante werden für die viskoelastische Schaumträgerschicht thermisch-vernetzbare Polymere auf Poly(meth)acrylatbasis eingesetzt. Die Masse umfasst vorteilhaft ein Polymer, bestehend aus

(a1) 70 bis 100 Gew.-% Acrylsäureester und/oder Methacrylsäureester und/oder deren freien Säuren folgender Strukturformel

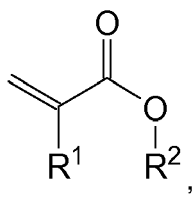

wobei $R^1$ H oder $CH_3$ darstellt und $R^2$ H oder Alkylketten mit 1 bis 14 C-Atomen darstellt;

(a2) 0 bis 30 Gew.-% olefinisch ungesättigte Monomere mit funktionellen Gruppen und

(a3) optional weitere Acrylate und/oder Methacrylate und/oder olefinisch ungesättigte Monomere (vorzugsweise mit einem Anteil zwischen 0 bis 5 Gew.-%), die mit der Komponente (a1) copolymerisierbar sind und eine funktionelle

Gruppe aufweisen, die mittels des Kupplungsreagenzes zu einer kovalenten Vernetzung führt.

Die Gewichtsangaben beziehen sich auf das Polymer.

Vorzugsweise werden für die Monomere (a1) Acrylmomonere, umfassend Acryl- und Methacrylsäureester mit Alkylgruppen, bestehend aus 1 bis 14 C-Atomen, eingesetzt. Spezifische Beispiele, ohne sich durch diese Aufzählung einschränken zu wollen, sind Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat und deren verzweigte Isomere wie zum Beispiel 2-Ethylhexylacrylat.

Weitere einzusetzende Verbindungsklassen, die ebenfalls in geringen Mengen unter (a1) hinzugesetzt werden können, sind Cyclohexylmethacrylate, Isobornylacrylat und Isobornylmethacrylate.

Deren Anteil beträgt vorzugsweise maximal bis zu 20 Gew.-%, weiter vorzugsweise maximal bis zu 15 Gew.-%, jeweils bezogen auf die Gesamtmenge an Monomeren (a1).

Vorzugsweise werden für (a2) Monomere verwendet wie beispielsweise Maleinsäureanhydrid, Itaconsäureanhydrid, Glycidylmethacrylat, Benzylacrylat, Benzylmethacrylat, Phenylacrylat, Phenylmethacrylat, *tert*-Butylphenylacrylat, *tert*-Butylphenylmethacrylat, Phenoxyethylacrlylat, Phenoxyethylmethacrylat, 2-Butoxyethyl-methacrylat, 2-Butoxyethylacrylat, Dimethylaminoethylmethacrylat, Dimethylaminoethylacrylat, Diethylaminoethylmethacrylat, Diethylaminoethylacrylat und Tetrahydrofufurylacrylat, wobei diese Aufzählung nicht abschließend ist.

Ebenso bevorzugt werden für die Komponente (a2) aromatische Vinylverbindungen eingesetzt, wobei die aromatischen Kerne bevorzugt aus $C_4$- bis $C_{18}$-Bausteinen bestehen und auch Heteroatome enthalten können. Besonders bevorzugte Beispiele sind Styrol, 4-Vinylpyridin, *N*-Vinylphthalimid, Methylstyrol und 3,4-Dimethoxystyrol, wobei diese Aufzählung nicht abschließend ist.

Besonders bevorzugte Beispiele für die Komponente (a3) sind Hydroxyethylacrylat, 3-Hydroxypropylacrylat, Hydroxyethylmethacrylat, 3-Hydroxypropylmethacrylat, 4-Hydroxybutylacrylat, 4-Hydroxybutylmethacrylat, Allylalkohol, Itaconsäure, Acrylamid und Cyanoethylmethacrylat, Cyanoethylacrylat, 6-Hydroxyhexylmethacrylat, *N-tert*-Butylacrylamid, *N*-Methylolmethacrylamid, *N*-(Butoxymethyl)methacrylamid, *N*-Methylolacrylamid, *N*-(Ethoxymethyl)acrylamid, *N*-Isopropylacrylamid, Vinylessigsäure, β-Acryloyl-oxypropionsäure, Trichloracrylsäure, Fumarsäure, Crotonsäure, Aconitsäure, Dimethylacrylsäure, 4-Vinylbenzoesäure, wobei diese Aufzählung nicht abschließend ist.

Monomere der Komponente (a3) können vorteilhaft auch derart gewählt werden, dass sie funktionelle Gruppen enthalten, die eine nachfolgende strahlenchemische Vernetzung (beispielsweise durch Elektronenstrahlen oder UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, *N-tert*-Butylacrylamid, Allylacrylat, wobei diese Aufzählung nicht abschließend ist.

Zur Polymerisation werden die Monomere dermaßen gewählt, dass die resultierenden Polymere als thermisch vernetzbare Polyacrylatmassen eingesetzt werden können, insbesondere derart, dass die resultierenden Polymere haftklebende Eigenschaften entsprechend dem "Handbook of Pressure Sensitive Adhesive Technology" von Donatas Satas (van Nostrand, New York, 1989) besitzen.

Die Art der Comonomere wird so gewählt, dass die Glasübergangstemperatur $T_{G,A}$ der Polymere unterhalb der Anwendungstemperatur, bevorzugt bei $T_{G,A}$ <= 15°C liegt. Um dies zu erreichen, wird weiterhin die mengenmäßige Zusammensetzung der Monomermischung vorteilhaft derart gewählt, dass sich nach der Fox-Gleichung (G1) (vgl. T.G. Fox, Bull. Am. Phys. Soc. 1956, 1, 123) der gewünschte $T_{G,A}$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Die Bestimmung derselben erfolgt nach der später ausführlich erläuterten Messmethoden A4.

Zur Herstellung der Polyacrylatmassen für den viskoelastischen Schaumträger werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxoinitiatoren. Prinzipiell eignen sich jedoch alle für Acrylate und/oder Methacrylate dem Fachmann geläufigen üblichen Initiatoren. Die Produktion von C-zentrierten Radikalen ist im Houben-Weyl, Methoden der Organischen Chemie, Vol. E 19a, Seiten 60 bis 147, beschrieben. Diese Methoden werden in bevorzugter Weise in Analogie angewendet.

Beispiele für Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di*tert*-butylperoxid, Azobisiisobutyronitril, Cyclohexylsulfonylacetylperoxid, Diisopropyl-percarbonat, *tert*-Butylperoktoat, Benzpinacol. Besonders bevorzugt werden als radikalische Initiatoren 2,2'-Azobis(2-methylbutyronitril) (Vazo® 67 der Firma DuPont), 1,1'-Azobis-(cyclohexancarbonsäurenitril) (Vazo® 88) und Bis(4-*tert*-butylcyclohexyl)peroxydicarbonat (Perkadox® 16 der Firma AkzoNobel) verwendet.

Die mittleren Molekulargewichte $M_n$ und $M_w$ der bei der radikalischen Polymerisation entstehenden Trägerschicht werden sehr bevorzugt derart gewählt, dass sie in einem Bereich von 20.000 bis 2.000.000 g/mol liegen; bevorzugt werden Trägerschichten mit mittleren Molekulargewichten $M_w$ von 200.000 bis 1.200.000 g/mol hergestellt. Die Bestimmung des mittleren Molekulargewichtes erfolgt über Gelpermeationschromatographie (GPC).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (zum Beispiel Hexan, Heptan, Octan, Isooctan), aromatische Kohlenwasserstoffe (zum Beispiel Benzol, Toluol, Xylol), Ester (zum Beispiel Essigsäureethylester, Essigsäurepropyl-, -butyl- oder -hexylester), halogenierte Kohlenwasserstoffe (zum Beispiel Chlorbenzol), Alkanole (zum Beispiel Methanol, Ethanol, Ethylenglycol, Ethylenglycolmonomethylether), Ketone (zum Beispiel Aceton, Butanon) und Ether (zum Beispiel Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe bestehend aus aliphatischen Alkoholen, Glycolen, Ethern, Glycolethern, Pyrrolidinen, *N*-Alkylpyrrolidinonen, *N*-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen sowie Derivaten und Gemischen davon.

Die Polymerisationszeit beträgt - je nach Umsatz und Temperatur - zwischen vier und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Weiterhin ist der Einsatz von Polymerisationsreglern ebenfalls vorteilhaft im Sinne der Erfindung, um somit die Polymerisation kontrolliert durchzuführen und einen Einfluss auf die Molmassenverteilung ausüben zu können.

Hierbei können zur Radikalstabilisierung in günstiger Vorgehensweise Nitroxide eingesetzt werden, wie zum Beispiel 2,2,5,5-Tetramethyl-1-pyrrolidinyloxyl (PROXYL), 2,2,6,6-Tetramethyl-1-piperidinyloxylpyrrolidinyloxyl (TEMPO), Derivate des PROXYLs oder des TEMPOs und weitere dem Fachmann geläufige Nitroxide.

Eine Reihe weiterer Polymerisationsmethoden, nach denen die Klebemassen in alternativer Vorgehensweise hergestellt werden können, lassen sich aus dem Stand der Technik wählen.

WO 96/24620 A1 beschreibt ein Polymerisationsverfahren, bei dem sehr spezielle Radikalverbindungen wie zum Beispiel phosphorhaltige Nitroxide, die auf Imidazolidin basieren, eingesetzt werden.

WO 98/44008 A1 offenbart spezielle Nitroxyle, die auf Morpholinen, Piperazinonen und Piperazindionen basieren.

DE 199 49 352 A1 beschreibt heterocyclische Alkoxyamine als Regulatoren in kontrolliert radikalischen Polymerisationen.

Als weitere kontrollierte Polymerisationsmethode lässt sich in vorteilhafter Weise zur Synthese von Blockcopolymeren die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) bestimmte MetallKomplexe eingesetzt werden. Die unterschiedlichen Möglichkeiten der ATRP sind ferner in den Schriften der US 5,945,491 A, der US 5,854,364 A und der US 5,789,487 A beschrieben.

Als sehr bevorzugter Herstellprozess wird eine Variante der RAFT-Polymerisation (reversible addition-fragmentation chain transfer polymerization) durchgeführt. Der Polymerisationsprozess ist zum Beispiel in den Schriften WO 98/01478 A1 und WO 99/31144 A1 ausführlich beschrieben. Zur Herstellung eignen sich besonders vorteilhaft Trithiocarbonate der allgemeinen Struktur R'''-S-C(S)-S-R''' (Macromolecules 2000, 33, Seiten 243 bis 245).

In einer sehr vorteilhaften Variante werden beispielsweise die Trithiocarbonate (TTC1) und (TTC2) oder die Thioverbindungen (THI1) und (THI2) zur Polymerisation eingesetzt, wobei Φ ein Phenylring, der unfunktionalisiert oder durch Alkyl- oder Arylsubstituenten, die direkt oder über Ester- oder Etherbrücken verknüpft sind, funktionalisiert sein kann, eine Cyanogruppe oder ein gesättigter oder ungesättigter aliphatischer Rest sein kann. Der Phenylring Φ kann optional einen oder mehrere Polymerblöcke, beispielsweise Polybutadien, Polyisopren, Polychloropren oder Poly(meth)acrylat, das entsprechend der Definition für P(A) oder P(B) aufgebaut sein kann, oder Polystyrol tragen, um nur einige zu nennen. Funktionalisierungen können beispielsweise Halogene, Hydroxygruppen, Epoxidgruppen, stickstoff- oder schwefelenthaltende Gruppen sein, ohne dass diese Aufzählung Anspruch auf Vollständigkeit erhebt.

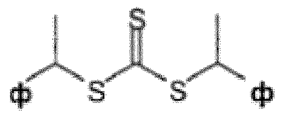

(TTC 1)

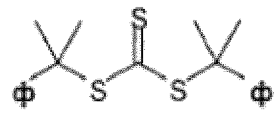

(TTC 2)

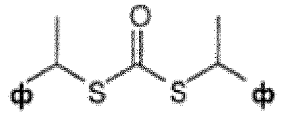

(THI 1)

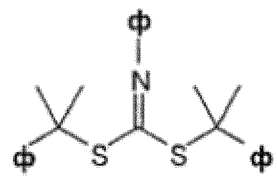

(THI 2)

In Verbindung mit den oben genannten kontrolliert radikalisch verlaufenden Polymerisationen werden Initiatorsysteme bevorzugt, die zusätzlich weitere radikalische Initiatoren zur Polymerisation enthalten, insbesondere die schon zuvor aufgezählten thermisch zerfallenden radikalbildenden Azo- oder Peroxoinitiatoren. Prinzipiell eignen sich hierfür jedoch alle für Acrylate und/oder Methacrylate bekannten üblichen Initiatoren. Weiterhin können auch Radikalquellen verwendet werden, die erst unter UV-Bestrahlung Radikale freisetzen.

Es kann den durch die erfindungsgemäßen Verfahren erhältlichen Polyacrylaten zumindest ein klebrigmachendes Harz beigemischt werden. Gemäß einer vorteilhaften Ausführungsform der Erfindung beträgt der Anteil an Harzen, bezogen auf die Gesamtzusammensetzung, zwischen 0 und 40 Gew.-%, vorteilhafterweise zwischen 20 bis 35 Gew.-%. Als zuzusetzende klebrigmachende Harze sind die vorbekannten und in der Literatur beschriebenen Klebharze einsetzbar.

Insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Bevorzugt lassen sich $\alpha$-Pinen, $\beta$-Pinen, $\delta$-Limonen-, Inden- und Kolophoniumharze einsetzen, deren disproportionierte, hydrierte, polymerisierte, veresterte Derivate und Salze, Terpenharze und Terpenphenolharze sowie $C_5$-, $C_5$/$C_9$-, $C_9$- und andere Kohlenwasserstoffharze. Auch Kombinationen dieser und weiterer Harze können vorteilhaft eingesetzt werden, um die Eigenschaften der resultierenden Klebmasse wunschgemäß einzustellen. Besonders bevorzugt lassen sich alle mit dem entsprechenden Polyacrylat kompatiblen (löslichen) Harze einsetzen. In einer besonders bevorzugten Vorgehensweise werden Terpenphenolharze und/oder Kolophoniumester hinzugesetzt. Vorgenannte Klebharze können sowohl allein als auch im Gemisch eingesetzt werden.

Optional können auch Additive wie pulver- und granulatförmige Füllstoffe, Farbstoffe und Pigmente, besonders auch abrasive und verstärkende, wie zum Beispiel Aerosile (pyrogene Kieselsäuren), Kreiden ($CaCO_3$), Titandioxide, Zinkoxide und Ruße verwendet und gerade im Falle der Schmelzeverarbeitung auch zu hohen Anteilen von 0,5 bis 50 Gew.-%, bezogen auf die Gesamtrezeptur, eingesetzt werden. Sehr bevorzugt können Aerosile und verschiedene Kreideformen als Füllstoff eingesetzt werden, wobei besonders bevorzugt Mikrosöhl-Kreide eingesetzt wird. Bei bevorzugten Anteilen bis zu 30 Gew.-% verändern sich die klebtechnischen Eigenschaften (Scherfestigkeit bei RT, Sofortklebkraft auf Stahl und PE) durch den Füllstoffzusatz praktisch nicht.

Weiterhin können, gerade im Falle der Substanzpolymerisation und der weiteren Verarbeitung aus der Polymerschmelze, schwerentflammbare Füllstoffe, wie beispielsweise Ammoniumpolyphosphat, weiterhin elektrisch leitfähige Füllstoffe (wie beispielsweise Leitruß, Kohlenstofffasern und/oder silberbeschichtete Kugeln), weiterhin thermisch leitfähige Materialien (wie beispielsweise Bornitrid, Aluminiumoxid, Siliciumcarbid), weiterhin ferromagnetische Additive (wie beispielsweise Eisen-(III)-oxide), weiterhin Additive zur Volumenerhöhung, insbesondere zur Herstellung geschäumter Schichten beziehungsweise syntaktischer Schäume, (wie beispielsweise Blähmittel, Glasvollkugeln, Glashohlkugeln, carbonisierte Mikrokugeln, phenolische Mikrohohlkugeln, Mikrokugeln aus anderen Materialien, expandierbare Mikroballons (Expancel® der Firma AkzoNobel), Kieselsäure, Silicate, organisch nachwachsende Rohstoffe, beispielsweise Holzmehl, organische und/oder anorganische Nanopartikel, Fasern), weiterhin Alterungsschutzmittel, Lichtschutzmittel, Ozonschutzmittel, Compoundierungsmittel und/oder Blähmittel zugegeben oder eincompoundiert werden. Als Alterungsschutzmittel können bevorzugt sowohl primäre, zum Beispiel 4-Methoxyphenol oder Irganox® 1076, als auch sekundäre Alterungsschutzmittel, zum Beispiel Irgafos® TNPP oder Irgafos® 168 der Firma BASF, auch in Kombination miteinander eingesetzt werden. Hier soll nur an dieser Stelle auf weitere entsprechenden Irganox® Typen der Firma BASF beziehungsweise Hostanox® der Firma Clariant verwiesen werden. Als weitere hervorragende Mittel gegen

Alterung können Phenothiazin (C-Radikalfänger) sowie Hydrochinonmethylether in Gegenwart von Sauerstoff sowie Sauerstoff selbst eingesetzt werden.

Bei den expandierbaren Mikrokunststoffkugeln, auch Mikroballons genannt, handelt es sich um elastische Hohlkugeln, die eine thermoplastische Polymerhülle aufweisen; sie werden daher auch als expandierbare polymere Mikrosphären bezeichnet. Diese Kugeln sind mit niedrigsiedenden Flüssigkeiten oder verflüssigtem Gas gefüllt. Als Hüllenmaterial finden insbesondere Polyacrylnitril, Polyvinyldichlorid (PVDC), Polyvinylchlorid (PVC), Polyamide oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind. Durch ein Einwirken auf die Mikroballons, insbesondere durch eine Wärmeeinwirkung - insbesondere durch Wärmezufuhr oder -erzeugung, beispielsweise durch Ultraschall oder Mikrowellenstrahlung -, erweicht einerseits die äußere Polymerhülle. Gleichzeitig geht das in der Hülle befindliche flüssige Treibgas in seinen gasförmigen Zustand über. Bei einer bestimmten Paarung von Druck und Temperatur dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich wie zum Beispiel von der Firma Akzo Nobel die Expancel DU-Typen (dry unexpanded), welche sich im Wesentlichen über ihre Größe (6 bis 45 μm Durchmesser im unexpandierten Zustand) und ihre zur Expansion benötigten Starttemperatur (75 °C bis 220 °C) differenzieren. Weiterhin sind unexpandierte Mikroballontypen auch als wässrige Dispersion mit einem Feststoff- beziehungsweise Mikroballonanteil von ca. 40 bis 45 Gew.-% erhältlich, weiterhin auch als polymergebundende Mikroballons (Masterbatche), zum Beispiel in Ethylvinylacetat mit einer Mikroballonkonzentration von ca. 65 Gew.-%. Weiterhin sind sogenannte Mikroballon-Slurry-Systeme erhältlich, bei denen die Mikroballons mit einem Feststoffanteil von 60 bis 80 Gew.-% als wässrige Dispersion vorliegen. Sowohl die Mikroballon-Dispersionen, die Mikroballon-Slurrys als auch die Masterbatche sind wie die DU-Typen zur Schäumung entsprechend der vorteilhaften Weiterbildung der Erfindung geeignet.

Durch ihre flexible, thermoplastische Polymerschale besitzen die mit Mikroballons hergestellten Schäume eine höhere Spaltüberbrückungsfähigkeit als solche, die mit nicht expandierbaren, nicht polymeren Mikrohohlkugeln (wie Glas- oder Keramikhohlkugeln) gefüllt sind. Darum eignen sie sich besser zum Ausgleich von Fertigungstoleranzen. Ferner kann ein solcher Schaum thermische Spannungen besser kompensieren.

Weiterhin optional kann im Anschluss an die Polymerisation das Polyacrylat auch mit anderen Polymeren geblendet beziehungsweise abgemischt werden. Hierzu eignen sich Polymere auf Basis von Naturkautschuk, Synthesekautschuk, Vinylaromatenblockcopolymer, zum Beispiel Styrolblockcopolymere, EVA, Siliconkautschuk, Acrylkautschuk, Polyvinylether. Die Herstellung der Polymerblends erfolgt entweder in Lösung oder erfolgt in einem Extruder, bevorzugt in einem Mehrwellenextruder oder in einem Planetwalzenmischer in der Schmelze.

Optional können die üblichen Weichmacher (Plastifizierungsmittel), insbesondere in Konzentrationen von bis zu 5 Gew.-%, zugesetzt werden. Als Weichmacher können beispielsweise niedermolekulare Polyacrylate, Phthalate, wasserlösliche Weichmacher, Weichharze, Phosphate, Polyphosphate, Adipate und/oder Citrate eingesetzt werden.

Bevorzugt wird die innere Festigkeit (Kohäsion) des viskoelastischen Polyacrylatschaumträgers durch eine Vernetzung gesteigert. Hierzu können den acrylathaltigen Massen optional verträgliche Vernetzersubstanzen zugesetzt werden. Als Vernetzer eignen sich zum Beispiel Metallchelate, multifunktionelle Isocyanate, multifunktionelle Amine, multifunktionelle Epoxide, multifunktionelle Aziridine, multifunktionelle Oxazoline multifunktionelle Carbodiimide oder multifunktionelle Alkohole, die mit im Polymer enthaltenen und reaktiven Funktionalitäten reagieren. Auch multifunktionelle Acrylate lassen sich vorteilhaft als Vernetzer für eine actinische Bestrahlung verwenden.

Die viskoelastische Polyacrylatschaumträgerschicht des erfindungsgemäßen Haftklebeartikels hat eine Schichtdicke von mindestens 0,3 mm, bevorzugt von mindestens 0,5 mm. Ein typischer Schichtdickenbereich für solch eine Schaumschicht liegt zwischen 0,3 mm bis zu 5 mm, bevorzugt von 0,5 mm bis zu 2 mm, noch bevorzugter zwischen 0,5 mm und 1,2 mm. Die Schaumschicht weist eine zellulare Membranstruktur, bevorzugt eine geschlossenzellige Membranstruktur, besonders bevorzugt eine syntaktische Schaumstruktur auf, in der 15 bis 85 % des Volumens durch Hohlräume eingenommen werden.

Der erfindungsgemäße Schaumträger kommt auch ohne Klebharze (K), Additive (A), zu denen auch die erwähnten Füllstoffe gezählt werden, Weichmacher (W) oder zusätzliche Polymere (P) aus, des Weiteren auch ohne K+A, K+W, K+P, A+W und den anderen permutativ möglichen Zweierkombinationen, des Weiteren auch ohne K+A+W, K+A+P und den anderen permutativ möglichen Dreierkombinationen oder ohne K+A+W+P.

Weitere Verfahrensdurchführung zur Herstellung des viskoelastischen Schaumträgers

Die Herstellung des viskoelastischen Schaumträgers des erfindungsgemäßen Klebebands kann aus Lösung oder lösungsmittelfrei aus der Schmelze erfolgen. Besonders bevorzugt ist die Verarbeitung aus der Schmelze, da aufgrund des fehlenden Trocknungsschrittes sich Schäume mit besonders dicken Schichten herstellen lassen. Wie zuvor beschrieben, ist eine thermische Vernetzung des viskoelastischen Schaumes wünschenswert, da somit im Gegensatz zur photochemischen Vernetzung oder zur Elektronenstrahlhärtung ein Vernetzungsgradient vermieden werden kann. Die thermische Vernetzung kann insbesondere vorteilhaft entsprechend den in den EP 0 752 435 A1 sowie EP 1 978 069 A1 genannten thermischen Vernetzungsverfahren von Polyacrylatschmelzen durchgeführt werden, welche daher explizit in den Offenbarungsgehalt der vorliegenden Schrift eingeschlossen werden. Die Erfindung ist jedoch nicht darauf beschränkt. Weiterhin können alle, dem Fachmann geläufigen Vernetzungsverfahren eingesetzt werden.

Weiterhin ist die Verarbeitung aus der Schmelze besonders bevorzugt, da somit der Schäumungsprozess gezielt gesteuert werden kann, wodurch die Zellstruktur sowie die Dichte des Schaumträgers sich optimal einstellen lassen. Der Schäumungsprozess kann insbesondere vorteilhaft entsprechend der WO 2010/112346 A1 durchgeführt werden, welche daher explizit in den Offenbarungsgehalt der vorliegenden Schrift eingeschlossen wird. Die Erfindung ist jedoch nicht darauf beschränkt.

Eine weitere sehr vorteilhafte Ausführungsform des Schäumungsprozesses der vorliegenden Erfindung ist die gezielte Unterdrückung der Schäumung im Extrusionsprozess, welche dann nach Verlassen einer Düse durch den dadurch erzeugten Druckverlust erfolgt.

Das Verfahren zur Unterdrückung der Schäumung im Extrusionsprozess wird bevorzugt wie folgt durchgeführt (vergleiche. Figuren 1 und 2).

Das Basispolymer K wird aufgeschmolzen und - insbesondere mittels eines Förderaggregates 1 - zu einem Mischaggregat 2 gefördert. In diesem und gegebenenfalls in einem oder mehreren weiteren Mischaggregaten 3 (als Mischaggregate 2, 3 eignen sich insbesondere Extruder wie Doppelschneckenextruder und/oder Planetwalzenextruder) werden an bestimmten Dosierstellen 22, 23, 34, 35, 36 weitere erforderliche und gegebenenfalls optionale Komponenten zugemischt wie Harze, Beschleuniger, Vernetzer, Füllstoffe und dergleichen und auch die Mikroballons. Falls erforderlich, ist zumindest eines der Mischaggregate 2, 3 oder ein weiteres optional vorgesehenes Aggregat (in den Figuren nicht dargestellt) geeignet, die Polymerschmelze zu entgasen. Auf diese Entgasungseinheit kann verzichtet werden, insbesondere wenn alle Mischungsbestandteile vor der Zugabe bereits entgast wurden und das erneute Eindringen von Gasen vermieden wurde. Vorteilhaft findet ein Vakuumdom V zur Erzeugung des Unterdruckes, der die Entgasung bewirkt, Anwendung. Die Zugabe der Mikroballons findet insbesondere bei erhöhtem Druck statt, um bei der Temperatur der Polymerschmelze ein zu frühes Expandieren der Mikrohohlkugeln zu unterdrücken.

Die derart hergestellte Schmelzmischung wird in eine Düse 5 überführt. Bei Verlassen der Düse 5 findet ein Druckabfall statt, so dass die Mikrohohlkugeln nach deren Verlassen, also nach dem Druckabfall, expandieren und für eine Schäumung der Polymermasse sorgen. Die derart geschäumte Masse wird anschließend ausgeformt, insbesondere durch ein Walzwerk 4, wie einem Walzenkalander.

Das Verfahren wird nachfolgend anhand zweier Figuren näher erläutert, ohne sich durch diese beispielhafte Darstellung in der erfindungsgemäßen Lehre unnötig beschränken zu wollen. Es zeigt

Fig. 1 einen für die Verfahrensdurchführung besonders zweckmäßigen Vorrichtungsaufbau und

Fig. 2 überlagert dem zuvor behandelten Vorrichtungsaufbau beispielhaft eine örtliche Zuordnung der einzelnen Verfahrensschritte und dazu insbesondere die Parameter Temperatur und Druck.

Die Anordnung der Aggregate und Verfahrensapparaturbestandteile, insbesondere der Mischaggregate, ist beispielhaft dargestellt und kann je nach Verfahrensführung variiert werden.

<u>Figur 1</u>

In einem ersten Aggregat 1, beispielsweise in einem Förderaggregat wie einem Extruder (insbesondere einem Einschneckenförderextruder), wird die Basispolymermasse K aufgeschmolzen und insbesondere mittels dieses Förderaggregats 1 als Polymerschmelze über ein insbesondere beheizbares Verbindungsstück 11 (zum Beispiel einen Schlauch oder ein Rohr) in ein zweites Aggregat 2, insbesondere ein Mischaggregat wie einen Doppelschneckenextruder, gefördert.

Über eine oder mehrere Dosierstellen 22, 23 in dem zweiten Aggregat können gemeinsam oder getrennt voneinander Additive zu der Basispolymerschmelze gegeben, wie beispielsweise alle Harze oder ein Teil der Harze, das Vernetzersystem oder Teile hiervon (insbesondere Vernetzer und/oder Beschleuniger), Füllstoffe, Farbpasten oder dergleichen.

Vor Verlassen des Aggregats 2, also insbesondere des Doppelschneckenextruders, wird die so abgemischte Polymerschmelze entgast, insbesondere über einen Vakuumdom V bei einem Druck von 175 mbar oder weniger, und anschließend über ein zweites insbesondere beheizbares Verbindungsstück 24 (zum Beispiel einen Schlauch oder ein Rohr) in ein drittes Aggregat 3 gefördert, insbesondere ein zweites Mischaggregat, zum Beispiel einen mit einem Gleitdichtring 36 versehenen Planetwalzenextruder, gefördert. Das dritte Aggregat 3, insbesondere der Planetwalzenextruder, verfügt über eine oder mehrere temperierbare Mischzonen 31, 32 und über eine oder mehrere Einspritzbeziehungsweise Dosiermöglichkeiten 33, 34, 35, um die Polymerschmelze einzugeben und mit weiteren - insbesondere bereits entgasten - Komponenten und/oder Additiven abzumischen.

Über eine Dosierstelle 34 wird beispielsweise ein Harz oder eine Harzmischung zugesetzt. Vorteilhaft wurde das Harz beziehungsweise die Harzmischung zuvor in einem separaten Vakuumdom V entgast. Über eine Dosierstelle 35 (hier nur schematisch an derselben Stelle wie 34 eingezeichnet, es kann sich - und wird sich in der Regel - aber durchaus um eine andere, an anderer Stelle des Extruders gelegene Dosierstelle handeln) werden die in eine Flüssigkeit eingebetteten Mikroballons zugegeben. Über dieselbe oder eine weitere, in Figur 1 nicht dargestellte Dosierstelle können das Vernetzersystem oder Teile hiervon (insbesondere noch fehlende Komponenten des Vernetzersystems) zugesetzt werden. Vorteilhaft können das Vernetzersystem oder Teile hiervon - insbesondere Vernetzer und/oder Beschleuniger - gemeinsam mit den Mikroballons als Mikroballon-Vernetzersystem-Mischung zugemischt werden. In einer Heizzone 32 (beheizbare Mischzone) wird die Polymerschmelze mit den zugesetzten Komponenten und/oder Additiven, jedenfalls den Mikroballons, compoundiert.

Die derart entstandene Schmelzmischung wird über ein weiteres Verbindungsstück oder eine weitere Fördereinheit 37, wie zum Beispiel eine Zahnradpumpe, in eine Düse 5 überführt. Nach Verlassen der Düse 5, also nach Druckabfall, expandieren die eingearbeiteten Mikroballons, so dass eine geschäumte Polymermasse, insbesondere eine geschäumte Selbstklebemasse, entsteht, welche anschließend ausgeformt wird, zum Beispiel mittels eines Walzenkalanders 4 bahnförmig ausgeformt wird (Walzen 41, 42, 43 des Kalanders, Trägermaterial 44, auf das die Polymerschicht aufgelegt wird).

Figur 2

Die Basispolymermasse K wird in einem ersten Aggregat 1, beispielsweise in einem Förderaggregat wie einem Extruder (insbesondere einem Einschneckenförderextruder), aufgeschmolzen und mit diesem als Polymerschmelze über einen beheizbaren Schlauch 11 oder einem ähnlichen Verbindungsstück (zum Beispiel einem Rohr) in ein zweites Aggregat 2, zum Beispiel ein Mischaggregat wie ein Planetwalzenextruder, gefördert. In Figur 2 ist hierfür beispielhaft ein modular aufgebauter Planetwalzenextruder mit vier Modulen, die unabhängig voneinander temperiert werden können vorgesehen ($T_1$, $T_2$, $T_3$, $T_4$).

Über die Dosieröffnung 22 können weitere Komponenten zugegeben werden, hier insbesondere ein geschmolzenes Harz oder eine geschmolzene Harzmischung (zur besseren Vermischbarkeit kann es vorteilhaft sein, im Segment $T_2$, bevorzugt auch im Segment $T_1$ eine hohe Temperatur zu wählen). Ebenso besteht die Möglichkeit, zusätzliche Additive oder Füllstoffe, wie zum Beispiel Farbpasten, über weitere vorhandene Dosierstellen wie 22 im Aggregat 2 zuzuführen (nicht separat eingezeichnet). An der Dosierstelle 23 kann vorteilhaft der Vernetzer hinzugefügt werden. Hierzu ist es vorteilhaft, die Temperatur der Schmelze abzusenken, um die Reaktivität des Vernetzers zu senken und hierdurch die Verarbeitungszeit zu erhöhen (Temperatur im Segment $T_4$ niedrig, vorteilhaft auch im Segment $T_3$ niedrig).

Mittels eines beheizbaren Schlauches 24b oder eines ähnlichen Verbindungsstücks und einer Schmelzepumpe 24a oder einer anderen Fördereinheit wird die Polymerschmelze in ein drittes Aggregat 3, beispielsweise ein weiteres Mischaggregat wie ein Doppelschneckenextruder, überführt und an Position 33 in dieses Aggregat 3 eingespeist. An der Dosierstelle 34 wird beispielsweise die Beschleunigerkomponente hinzugefügt. Der Doppelschneckenextruder ist vorteilhaft derart ausgelegt, dass er als Entgasungsvorrichtung eingesetzt werden kann. So kann beispielsweise an der dargestellten Stelle die gesamte Mischung in einem Vakuumdom V bei einem Druck von 175 mbar oder weniger von allen Gaseinschlüssen befreit werden. Im Anschluss an die Vakuumzone befindet sich auf der Schnecke ein Blister B (eine insbesondere als umlaufender Spalt, beispielsweise als Ringspalt, ausgebildete Drosselstelle im Extrusionsraum, die insbesondere zur Einstellung des Drucks der im Extruder verarbeiteten Schmelze dient), welcher einen Druckaufbau in dem darauf folgenden Segment S ermöglicht. Durch geeignete Steuerung der Extruderdrehzahl und der dem Extruder nachgeschalteten Fördereinheit, beispielsweise einer Schmelzepumpe 37a, wird in dem Segment S zwischen Blister B und Schmelzepumpe 37a ein Druck von 8 bar oder größer aufgebaut. In diesem Segment S wird an einer Dosierstelle 35 die Mikroballonmischung (Mikroballons eingebettet in eine Flüssigkeit) eingegeben und im Extruder homogen in die Polymermasse eingearbeitet.

Die derart entstandene Schmelzmischung wird mittels der Fördereinheit (Schmelzepumpe 37a und ein Verbindungsstück 37b, zum Beispiel ein Schlauch) in eine Düse 5 überführt. Nach Verlassen der Düse 5, also nach Druckabfall, expandieren die eingearbeiteten Mikroballons, so dass eine geschäumte Polymermasse, insbesondere eine geschäumte Trägerschicht S entsteht, welche anschließend ausgeformt wird, zum Beispiel mittels eines Walzenkalanders 4 bahnförmig ausgeformt wird.

Weiterhin können alle dem Fachmann geläugigen chemischen und physikalischen Schäumungsverfahren verwendet werden, sofern dadurch die thermische Vernetzung des Polyacrylats nicht beeinflusst wird.

Synthesekautschuk-Haftklebemasse

Zumindest eine Hauptseite des viskoelastischen Polyacrylatschaumträgers ist mit einer Haftklebemasseschicht verbunden, die einen Synthesekautschuk, besonders bevorzugt ein chemisch unvernetztes Gemisch von Vinylaromatenblockcopolymeren umfasst. Gemäß einer Variante der Erfindung ist eine Hauptseite des viskoelastischen Polyacrylatschaumträgers mit einer erfindungsgemäßen Haftklebemasseschicht und die andere Hauptseite mit einer anderen, insbesondere haftklebrigen Klebemasse versehen. Gemäß einer weiteren Variante der Erfindung sind beiden Hauptseiten des viskoelastischen Polyacrylatschaumträgers mit jeweils einer erfindungsgemäßen Haftklebemasseschicht versehen, wobei die Zusammensetzungen nicht identisch sein müssen.

Bevorzugt enthält die Haftklebemasse nur aus Vinylaromatenblockcopolymeren als Gerüstpolymer.

Die Strukturen der erfindungsgemäßen und als Gemische eingesetzten bevorzugten Blockcopolymeren sind entsprechend den allgemeinen Formeln I und II gewählt.

Demgemäß enthält eine erfindungsgemäße Haftklebemasse mindestens zu 70 Gew.-%, vorzugsweise zu 80 Gew.-% ein Gemisch aus

(i) Blockcopolymeren aus einer Mischung aus Blockcopolymeren mit der Struktur I und II

I) A'-B'
II) A-B-A, $(A-B)_n$, $(A-B)_nX$ und/oder $(A-B-A)_nX$, wobei

- X der Rest eines Kopplungsreagenzes ist,
- n eine ganze Zahl zwischen 2 und 10 ist,
- A und A' ein Polymerblock aus einem Vinylaromaten ist,
- B und B' ein Polymerblock ist, gebildet aus Butadien, einem Gemisch aus Butadien und Isopren und/oder einem Gemisch aus Butadien und Styrol und
- A und A' beziehungsweise B und B' gleich oder unterschiedlich sein können,

(ii) mindestens ein Klebharz,

wobei der Anteil der Blockcopolymere I) zwischen 30 und 70 Gew.-% bezogen auf die Gesamtmenge an Blockcopolymeren ist,
wobei der Anteil A bei den Blockcopolymeren II) zwischen 25 und 40 Gew.-%, bevorzugt zwischen 25 und 33 Gew.-%, liegt,
und wobei die A-B-Einheit innerhalb von zumindest einem der Vinylaromatenblockcopolymere der Struktur II ein Molekulargewicht $M_w$ von größer 65.000 g/mol aufweist und das Molekulargewicht $M_w$ des gesamten Blockcopolymeren II größer als 130.000 g/mol ist.

Vorzugsweise haben alle A-B-Einheiten innerhalb von zumindest einem der Vinylaromatenblockcopolymere der Struktur II ein Molekulargewicht $M_w$ von größer 65.000 g/mol.

Weiter vorzugsweise haben alle A-B-Einheiten in allen Vinylaromatenblockcopolymeren der Struktur II ein Molekulargewicht $M_w$ von größer 65.000 g/mol.

Gemäß einer vorteilhaften Ausführungsform der Erfindung enthält die Haftklebemasse als Elastomere nur ein Gemisch von Vinylaromatenblockcopolymeren der Strukturen I und II.

Das Gemisch kann aus genau einem Vinylaromatenblockcopolymer der Struktur I und genau einem Vinylaromatenblockcopolymer der Struktur II bestehen.

In einer alternativen Ausführungsform der Erfindung enthält das Gemisch mehrere unterschiedliche Vinylaromatenblockcopolymeren der Struktur I und/oder der Struktur II, vorzugsweise gleichzeitig mehrere unterschiedliche Vinylaromatenblockcopolymeren der Struktur I und der Struktur II.

Gemäß einer weiteren bevorzugten Ausführungsform der Erfindung liegt der Anteil des Vinylaromatenblockcopolymers oder der Vinylaromatenblockcopolymere der Struktur I an der Summe aus den Vinylaromatenblockcopolymeren der Struktur I und II zwischen 50 und 65 Gew.-%.

Gemäß einer weiteren bevorzugten Ausführungsform der Erfindung betragen der oder die Anteil(e) des Vinylaromatenendblocks A' an dem Blockcopolymer der Struktur I zwischen 20 und 40 Gew.-%, bevorzugt zwischen 25 und 33 Gew.-%.
In einer Variante der Erfindung liegen der oder die Anteil(e) des Vinylaromatenendblocks A' an dem Blockcopolymer der Struktur I zwischen 13 und 20 Gew.-%.

Als Vinylaromaten A beziehungsweise A' innerhalb der Vinylaromatenblockcopolymere können zum Beispiel eingesetzt werden Styrol, Vinyltoluol, $\alpha$-Methylstyrol, Chlorstyrol, o-, oder p-Methylstyrol 2,5-Dimethylstyrol, p-Methoxystyrol und p-tert.-Butylstyrol.

Das Polymer B beziehungsweise B' kann aus Butadien allein oder im Gemisch mit Isopren oder Styrol gebildet werden. Dabei sind sowohl Blockstrukturen als auch statisch verteilte Monomer möglich.

Übliche Kopplungsreagenzien zur Herstellung von Zwei-, Drei- sowie Multi- und Sternblockcopolymeren sind dem Fachmann bekannt. Um nur einige zu nennen, werden beispielhaft 2-Vinylpyridin, 1,4-Di(brommethyl)benzol, Dichlordimethylsilan oder 1,2-Bis(trichlorsilyl)ethan genannt, ohne die Kopplungsreagenzien darauf zu beschränken. Von diesen Kopplungsreagenzien verbleibt nach der Kopplung X als Rest.

Ein geeignetes Vinylaromatenblockcopolymer umfasst einen oder mehrere gummiartige Blöcke B beziehungsweise B' (Weichblöcke) und einen oder mehrere glasartige Blöcke A beziehungsweise A'. Im Folgenden sind, wenn A und B erwähnt werden, stets auch A' und B' gemeint In einigen Ausführungsformen umfasst das Blockcopolymer mindestens einen glasartigen Block. In einigen weiteren erfindungsgemäßen Ausführungsformen umfasst das Blockcopolymer zwischen einem und fünf glasartigen Blöcken.

In einigen vorteilhaften Ausführungsformen wird zusätzlich zu den Strukturen I und II noch ein Blockcopolymer verwendet, welches ein Multiarm-Blockcopolymer ist. Dieses wird durch die allgemeine Formel $Q_n$-Y beschrieben, worin Q einen Arm des Multiarm-Blockcopolymers repräsentiert und n wiederum die Anzahl an Armen darstellt, wobei n ganze Zahl von mindestens 3 ist. Y ist der Rest eines Multifunktionskopplungsreagenzes. Jeder Arm Q hat unabhängig die Formel A-B, worin analog den Strukturen I und II A den glasartigen Block und B den Weichblock repräsentiert.

Der Block A ist generell ein glasartiger Block mit einer Glasübergangstemperatur (Tg), die oberhalb der Raumtemperatur liegt. In einigen vorteilhaften Ausführungsformen liegt der Tg des glasartigen Blockes bei mindestens 40 °C, bevorzugt bei mindestens 60 °C, noch bevorzugter bei mindestens 80 °C oder sehr bevorzugt bei mindestens 100 °C.

Das Vinylaromatenblockcopolymer weist weiterhin generell einen gummiartigen Block B, beziehungsweise Weichblock, mit einem Tg von kleiner als Raumtemperatur auf. In einigen Ausführungsformen ist der Tg des Weichblocks kleiner als 0 °C oder sogar kleiner als -10 °C. In weiteren vorteilhaften Ausführungsformen ist der Tg des Weichblocks kleiner als -40 °C oder noch bevorzugter kleiner als -60 °C.

Neben den für die Formeln I und II genannten erfindungsgemäßen und besonders bevorzugten Monomere für den Weichblock B umfassen weitere vorteilhafte Ausführungsformen ein polymerisiertes konjugiertes Dien, ein hydriertes Derivat eines polymerisierten konjugierten Diens oder eine Kombinationen davon. In einigen Ausführungsformen umfassen die konjugierten Diene 4 bis 12 Kohlenstoffatome. Beispielhaft seien für weitere vorteilhafte konjugierte Diene für den gummiartigen Block B zusätzlich Ethylbutadien, Phenylbutadien, Piperylen, Pentadien, Hexadien, Ethylhexadien und Dimethylbutadien genannt, wobei die polymerisierten konjugierten Diene als Homopolymer oder als Copolymer vorliegen können.

In einer weiteren besonderen Ausführungsform wird zusätzlich zu der Mischung der linearen Blockcopolymer der Struktur I und/oder II noch ein oder mehrere der zuvor erwähnten und beschriebenen Multiarm-Blockcopolymere verwendet. Hierdurch sowie durch den Einsatz von Endblockverstärken wie beispielsweise $\alpha$-Methylstyrolharze kann die Scherfestigkeit der erfindungsgemäßen chemisch unvernetzten Haftklebemasse erhöhen, ohne dabei ein chemisches kovalentes Netzwerk aufzubauen. Die Kohäsion der Masse kann erhöht werden ohne dabei das Aufließverhalten negativ zu verändern, was im Falle einer Vernetzung, wie schon oben beschrieben, zwangsläufig auftreten würde. Vorteilhafte Ausführungsformen weisen ein Verhältnis der linearen Blockcopolymere zu den Multiarm-Blockcopolymere von 1.5:1 bis 9:1 auf.

Die Haftklebemasse weist neben dem mindestens einen Vinylaromatenblockcopolymer mindestens ein Klebharz auf, um die Adhäsion in gewünschter Weise zu erhöhen. Das Klebharz sollte mit dem Elastomerblock (Weichblock) der Blockcopolymere verträglich sein. Geeignete Klebharze sind unter anderem vorzugsweise nicht hydrierte, partiell oder vollständig hydrierte Harze auf Basis von Kolophonium oder Kolophoniumderivaten, Idealerweise ist es nicht verträglich mit den Acrylatpolymeren des viskoelastischen Polyacrylatschaumträgers. Geeignete Klebharze sind unter anderem vorzugsweise hydrierte Polymerisate des Dicyclopentadiens, nicht hydrierte, partiell, selektiv oder vollständig hydrierte Kohlenwasserstoffharze auf Basis von $C_5$-, $C_5/C_9$-, $C_9$-Monomerströmen, oder besonders bevorzugt Polyterpenharze auf Basis von $\alpha$-Pinen und/oder ß-Pinen und/oder $\delta$-Limonen. Vorgenannte Klebharze können sowohl allein als auch im Gemisch eingesetzt werden. Zudem kann die Klebmasseformulierung auch Klebharze enthalten, die bei Raumtemperatur flüssig sind.

Eine weiterhin bevorzugte Ausführungsform umfasst ein erstes Harz mit hohem Tg, welches eine Glasübergangstemperatur von mindestens 60 °C aufweist. Die hierbei verwendeten Formulierungen "hohe Glasübergangstemperatur, und "Harz mit hohem Tg" beziehen sich hierbei auf Harze mit einer Glasübergangstemperatur von mindestens 60 °C. In weiteren bevorzugten Ausführungsformen besitzt das erste Harz mit hohem Tg eine Glasübergangstemperatur von mindestens 65 °C oder sogar mindestens 70 °C. In einer weiteren bevorzugten Ausführungsform hat das erste Hoch-Tg-Harz einen Erweichungspunkt von mindestens 115 °C und in weiteren Ausführungsformen von mindestens 120 °C.

Dieses Klebeharz ist insbesondere mit den Elastomerblöcken der Blockcopolymere kompatibel.

Weiterhin umfasst eine weitere bevorzugte Ausführungsform der Haftklebemasseschicht ein zweites Harz mit hohem Tg, welches hauptsächlich mit den glasartigen Blöcken der linearen Blockcopolymere und/oder der Multiarm-Blockcopolymere beliebig kompatibel ist. Hauptsächlich kompatibel bedeutet hierbei, dass es auf alle Fälle mit dem glasartigen Block und möglicherweise mit dem Elastomerblock kompatibel ist.

Weitere Ausführungsformen der Haftklebemasseschicht umfassen zusätzlich noch mindestens eine weitere Komponente, die aus der Gruppe von Harzen mit niedriger Glasübergangstemperatur, Weichmachern oder Kombinationen daraus gewählt ist. Harze mit niedrigem Tg werden im Sinne dieser Erfindung als Harze verstanden, die einen Tg von weniger als 60 °C aufzeigen.

Besonders bevorzugt ist ein Verhältnis des Elastomerblock-kompatiblen Harzes mit hohem $T_g$ zum Harz mit hohem $T_g$, welches zum glasartigen Block kompatibler ist, von 1:1 zu 19:1.

Als weitere Additive können typischerweise genutzt werden:

- primäre Antioxidantien, wie zum Beispiel sterisch gehinderte Phenole
- sekundäre Antioxidantien, wie zum Beispiel Phosphite oder Thioether
- Prozessstabilisatoren, wie zum Beispiel C-Radikalfänger
- Lichtschutzmittel, wie zum Beispiel UV-Absorber oder sterisch gehinderte Amine
- Verarbeitungshilfsmittel
- allgemein Alterungsschutzmittel
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene, wie natürliches oder synthetisch erzeugtes Polyisopren oder Polybutadien, chemisch im wesentlichen gesättigte Elastomere, wie zum Beispiel gesättigte Ethylen-Propylen-Copolymere, $\alpha$-Olefincopolymere, Polyisobutylen, Butylkautschuk, Ethylen-Propylenkautschuk sowie chemisch funktionalisierte Kohlenwasserstoffe, wie zum Beispiel halogenhaltige, acrylathaltige oder vinyletherhaltige Polyolefine, um nur einige wenige zu nennen.

Die Ausformung der Haftklebemassenformulierung auf mindestens einer Seite des viskoelastischen Polyacrylatschaumträgers zur Haftklebemasseschicht kann mittels aller dem Fachmann geläufigen Verfahren erfolgen. Beispielsweise können die Blockcopolymere, die geeigneten Harze und weitere Zusätze wie Weichmacher und Alterungsschutzmittel in einem geeigneten Lösungsmittel gelöst und anschließend auf einem Releaseliner (Trennmaterial) oder direkt auf dem viskoelastischen Polyacrylatschaumträger mit herkömmlichen Verfahren beschichtet werden, welche unter anderem Rakelstreich-, Walzenstreich-, Gravurstreich-, Stabstreich-, Gießbeschichtungs-, Sprühbeschichtungs- und Luftbürstenstreichverfahren umfassen. Ebenfalls im Sinne der Erfindung ist die im Wesentlichen lösungsmittelfreie Herstellung und Beschichtung der Haftklebemassenformulierung zur Ausformung einer Haftklebemasseschicht auf dem viskoelastischen Polyacrylatschaumträger, wobei mit im Wesentlichen gemeint ist, dass die Formulierung weniger als 20 %, bevorzugt weniger als 10 %, weiterhin bevorzugt weniger als 1 % und besonders bevorzugt weniger als 0,1 % Lösungsmittel enthält. Solche im Wesentlichen lösungsmittelfreien Verfahren umfassen unter anderem die Compoundierung mittels Kalandrieren, Walzenmahlwerke und Extrusion (zum Beispiel Einschnecken-, Zweischnecken- und Planetwalzenextruder). Für die batchweise Verarbeitung der Haftklebemasseformulierung sind handelsübliche Innenmischer wie BRABENDER oder BANBURY geeignet. Nach der Compoundierung wird die Haftklebemasse bevorzugt durch eine formgebende Düse beschichtet, wobei die Beschichtung direkt auf dem Schaumträger als auch auf einem Trennmaterial mit anschließender Laminierung auf einen Schaumträger erfolgen kann.

Die erfindungsgemäße Haftklebemasse kommt auch ohne Additive (A), zu denen auch die erwähnten Füllstoffe gezählt werden, Weichmacher (W) oder zusätzliche Polymere (P) aus, des Weiteren auch ohne A+W, A+P und den anderen permutativ möglichen Zweierkombinationen, des Weiteren auch ohne A+W+P.

Die Haftklebemasseschicht wird vorteilhaft mit einem Flächengewicht von 40 bis 100 g/m$^2$ auf der viskoelastischen Schaumträgerschicht des erfindungsgemäßen Haftklebeartikels aufgetragen.

In einer vorteilhaften Ausführungsform des erfindungsgemäßen Haftklebeartikels, insbesondere Haftklebbandartikels, sind beide Seiten des viskoelastischen Polyacrylatschaumträgers mit der erfindungsgemäßen Synthesekautschukhaftklebemasse, insbesondere einer chemisch unvernetzten Haftklebemasse umfassend eine Mischung aus Vinylaromatenblockcopolymeren, verbunden.

In einer weiteren bevorzugten Ausführungsform ist der Schaumträger nur auf einer Seite mit der erfindungsgemäßen Synthesekautschukhaftklebemasse verbunden. Die andere, der Haftklebemasse gegenüberliegende Seite des Schaumträgers kann dabei keine weitere Haftklebemasseschicht oder andersartige Beschichtung aufweisen, da - ebenfalls im Sinne der Erfindung - der viskoelastische Polyacrylatschaumträger an sich die Charakteristika und Eigenschaften einer Haftklebemasse aufweist. Weiterhin kann jene Seite in einer alternativen Ausführungsform eine weitere Haftklebemasseschicht aufweisen, wobei jede herkömmliche Haftklebemasse basierend auf Polyacrylaten, Silikonen, Polyurethan, Naturkautschuk, Poly-$\alpha$-olefinen und weiteren dem Fachmann geläufigen Basismaterialien verwendet werden kann.

In einer weiteren bevorzugten Ausführungsform kann jene gegenüberliegende Seite des Schaumträgers eine hitzeaktivierbare Klebemasseschicht umfassen. Unter einer hitzeaktivierbaren Klebmasseschicht wird eine Klebmasseschicht verstanden, die erst durch Erwärmen die maximal erreichbare Klebfestigkeit zu einem Substrat erreicht, wobei die hitzeaktivierbare Klebemasse bei Raumtemperatur haftklebrig sein kann aber nicht muss. Bevorzugt werden im Rahmen dieser Erfindung zur Herstellung solch einer hitzeaktivierbaren Klebmasseschicht Thermoplasten wie zum Beispiel ein Copolymer basieren auf Ethylen und Propylen oder ein thermoplastisches Polyurethan verwendet, welche noch zusätzlich mit Harzen abgemischt sein können.

Das Klebeband ist für Transport, Lagerung oder Stanzung vorzugsweise mindestens einseitig mit einem Liner versehen, also zum Beispiel einer silikonbeschichteten Folie oder einem Silikonpapier.

Weitere Einzelheiten, Ziele, Merkmale und Vorteile der vorliegenden Erfindung werden nachfolgend anhand mehrerer, bevorzugte Ausführungsbeispiele darstellende Figuren näher erläutert. Es zeigen

Figur 3 ein einseitiges Haftklebeband,
Figur 4 ein beidseitiges Haftklebeband.

Figur 3 zeigt ein einseitig klebendes Haftklebeband 91. Das Haftklebeband 91 weist eine Klebeschicht 92 auf, die durch Beschichtung einer der zuvor beschriebenen Haftklebemasse auf einen Träger 93 hergestellt wurde. Der Haftklebemassenauftrag beträgt bevorzugt zwischen 40 und 100 g/$m^2$.

Zusätzlich (nicht gezeigt) kann noch eine Trennfolie vorgesehen sein, die die Klebeschicht 92 vor der Verwendung des Haftklebebandes 91 abdeckt und schützt. Die Trennfolie wird dann vor der Verwendung von der Klebeschicht 92 entfernt.

Der in Figur 4 dargestellte Produktaufbau zeigt ein Haftklebeband 1 mit einem Träger 93, der beidseitig mit einer Haftklebemasse beschichtet ist und somit zwei Klebeschichten 92 aufweist. Der Haftklebemassenauftrag je Seite beträgt wiederum bevorzugt zwischen 40 und 100 g/$m^2$.

Auch bei dieser Ausgestaltung wird bevorzugt zumindest eine Klebeschicht 92 mit einer Trennfolie abgedeckt. Bei einem aufgerollten Klebeband kann diese eine Trennfolie gegebenenfalls auch die zweite Klebeschicht 92 abdecken. Es können aber auch mehrere Trennfolien vorgesehen sein.

Des Weiteren ist es möglich, dass die Trägerschicht mit einer oder mehreren Beschichtungen versehen ist. Weiterhin kann auch nur eine Seite des Haftklebebandes mit der erfinderischen Haftklebemasse ausgestattet sein und auf der anderen Seite eine andere Haftklebemasse eingesetzt werden.

Als Alternative zu Trennfolien können beispielsweise auch Trennpapiere oder dergleichen eingesetzt werden. In diesem Fall sollte die Oberflächenrauigkeit des Trennpapiers aber reduziert sein, um eine möglichst glatte Haftklebemassenseite zu realisieren.

In einem zusätzlichen Aspekt der Erfindung wird ein Verfahren zur Herstellung eines solchen Haftklebeproduktes beansprucht, beinhaltend:

(i) die Herstellung einer viskoelastischen Schaumträgerschicht, die eine Ober- und eine Unterseite aufweist, durch

(a) Bereitstellung einer mittels freier oder kontrollierter radikalischer Polymerisation polymerisierbarer Mischung, umfassend eines oder mehrerer Acrylat- und Alkylacrylatmonomere,
(b) Polymerisation der unter a) genannten Mischung,
(c) thermische Vernetzung und
(d) Schäumung des Polyacrylats und

(ii) die Beschichtung einer oder mehrerer Haftklebemassen, von denen zumindest eine erfindungsgemäß

(a) chemisch unvernetzt ist und
(b) ein Gemisch aus Synthesekautschuken enthält,

auf mindestens einer der Hauptseiten des besagten Acrylatschaumträgers, um somit eine Haftklebemasseschicht zu erzeugen

Ein weiteres besonderes vorteilhaftes Verfahren zur Herstellung eines solchen Haftklebeproduktes umfasst:

(i) die Herstellung einer viskoelastischen Schaumträgerschicht, die eine Ober- und eine Unterseite aufweist, durch

(a) Bereitstellung einer mittels freier oder kontrollierter radikalischer Polymerisation polymerisierbarer Mischung, umfassend eines oder mehrerer Acrylat- und Alkylacrylatmonomere,
(b) Polymerisation der unter a) genannten Mischung,
(c) Entfernung des Lösungsmittel

(d) Verarbeitung des Polyacrylats in der Schmelze
(e) in jener Schmelze Compoundierung und Homogenisierung von chemischen und/oder physikalischen Blähmitteln und thermischen Vernetzern in einem Extruder
(f) thermische Vernetzung sowie
(g) Schäumung des Polyacrylats und

(ii) die Beschichtung einer oder mehrerer Haftklebemassen, von denen zumindest eine erfindungsgemäß

(a) chemisch unvernetzt ist und
(b) ein Gemisch aus Vinylaromatenblockcopolymeren enthält sowie
(c) Harze umfasst, die nicht in einem Polyacrylat löslich sind und somit nicht in die Acrylatschaumträgerschicht migrieren können,

auf mindestens einer der Hauptseiten des besagten Acrylatschaumträgers, um somit eine Haftklebemasseschicht zu erzeugen.

Bevorzugte Klebebanddicken sind 100 μm bis 5000 mm, bevorzugt 250 μm bis 4000 μm und besonders bevorzugt 500 bis 3000 μm.

Vorteilhafte Anwendungen

Es hat sich gezeigt, dass die erfindungsgemäßen Klebebänder, welche einen thermisch vernetzten viskoelastischen Acrylatschaumträger und mindestens eine, mit dem Schaumträger direkt verbundene, chemisch unvernetzte Synthesekautschukmasse beinhalten, generell gute bis exzellente Klebeigenschaften aufweisen und darüber hinaus auch in kürzester Zeit, wobei darunter im Rahmen dieser Offenbarung ein Zeitraum von kleiner als 10 Minuten gemeint ist, die maximalen Klebkräfte nahezu erreichen. Außerdem zeigen sie auch gute Eigenschaften auf unpolaren Haftuntergründen (siehe Messung der Klebkraft 90°) sowie unter dynamischer und statischer Scherbelastung und eine sehr gute Alterungsstabilität.

Das erfindungsgemäße Klebeband ist somit hervorragend zur Verklebung auf unpolaren Oberflächen geeignet, zeigt aber darüber hinaus auf allen anderen Untergründen gute bis sehr gute Eigenschaften. Unter unpolaren Oberflächen werden Substrate mit einer niedrigen Oberflächenenergie beziehungsweise niedrigen Oberflächenspannung verstanden, insbesondere mit einer Oberflächenspannung von kleiner als 45 mN/m, bevorzugt von kleiner als 40 mN/m und besonders bevorzugt von kleiner 35 mN/m. Zur Bestimmung der Oberflächenspannung kann die Messung des Randwinkels erfolgen unter Verwendung eines Geniometers, oder es wird der Kontaktwinkel nach DIN EN 828 gemessen.

Insbesondere sind die erfindungsgemäßen Klebeprodukte zur permanenten und/oder temporären Verklebung unterschiedlicher Materialien und Komponenten wie beispielsweise Embleme, Kunststoffkörperformteile (zum Beispiel Stoßdämpfer) und Gummidichtungen auf der Karosserie eines Kraftfahrzeugs, insbesondere eines Autos. In einer Ausführungsform kann beispielsweise der Klebebandartikel durch die chemisch unvernetzte Synthesekautschukhaftklebemasseschicht auf der Karosserie eines Autos verklebt werden und im Anschluss wird ein Kunststoffformteil, -emblem oder etwas vergleichbares mit der anderen Seite des Klebebandartikels verbunden beziehungsweise verklebt, wobei die andere Seite eine Haftklebemasse-, eine hitzeaktivierbare Klebe- oder gar keine Schicht aufweisen kann. Üblicherweise werden das Emblem, das Kunststoffformteil oder die Dichtung zuerst mit dem Klebeband verklebt und der resultierende Verbund kann im Anschluss mit einem Kraftfahrzeug, insbesondere einem Auto verbunden werden.

Im Falle von Verklebungen von Gummidichtungen, insbesondere EPDM-Gummiprofilen, ist es besonders von Vorteil, wenn die Seite mit der erfindungsgemäßen chemisch unvernetzten Haftklebemasseschicht auf der Karosserie verklebt wird und wenn der Schaumträger auf der anderen Seite eine hitzeaktivierbare Klebeschicht aufweist, welche nach Aktivierung mit der Gummidichtung verbunden wird. Ebenfalls bevorzugt kann die direkte Verklebung der Gummidichtung auf dem Schaumträger sein.

Die Klebebandartikel im vorherigen Abschnitt beschriebenen Verbund mit der Gummidichtung können ohne weiteres mit einer Autotür verbunden und so als Türdichtung eingesetzt werden.

Im Folgenden wird die Erfindung anhand eines Beispiels näher erläutert, ohne die Erfindung damit zu beschränken.

Experimenteller Teil

Die folgenden beispielhaften Experimente sollen die Erfindung näher erläutern, ohne dass durch die Wahl der angegebenen Beispiele die Erfindung unnötig eingeschränkt werden soll.

Messmethoden (allgemein):

K-Wert (nach FIKENTSCHER) (Messmethode A1):

Der K-Wert ist ein Maß für die durchschnittliche Molekülgröße hochpolymerer Stoffe. Zur Messung wurden einprozentige (1g/100 mL) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach Fikentscher der K-Wert errechnen lässt (Polymer 1967, 8, 381 ff.)

Gelpermeationschromatographie GPC (Messmethode A2):

Die Angaben des gewichtsmittleren Molekulargewichtes $M_w$, des zahlenmittleren Molekulargewichts $M_N$ und der Polydispersität PD in dieser Schrift beziehen sich auf die Bestimmung per Gelpermeationschromatographie. Die Bestimmung erfolgt an 100 µL klarfiltrierter Probe (Probenkonzentration 4 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 p, $10^3$ Å, ID 8,0 mm x 50 mm verwendet. Zur Auftrennung werden die Säulen des Typs PSS-SDV, 5 p, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung)].

Feststoffgehalt (Messmethode A3):

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

Statische Glasübergangstemperatur $T_g$ beziehungsweise $T_{G,A}$ (Messmethode A4)

Die Bestimmung der statischen Glasübergangstemperatur erfolgt über Dynamische Differenzkalorimetrie nach DIN 53765. Die Angaben zur Glasübergangstemperatur Tg beziehungsweise $T_{G,A}$ beziehen sich auf den Glasumwandlungstemperatur-Wert Tg nach DIN 53765:1994-03, sofern im Einzelfall nichts anderes angegeben ist.

Dichtebestimmung mittels Pyknometer (Messmethode A5a)

Das Messprinzip beruht auf der Verdrängung der im Pyknometer befindlichen Flüssigkeit. Dabei wird erst das leere beziehungsweise das mit Flüssigkeit gefüllte Pyknometer gewogen und dann der zu vermessende Körper in das Gefäß gegeben.

Aus den Gewichtsunterschieden berechnet sich die Dichte des Körpers:

Es sei

- $m_0$ die Masse des leeren Pyknometers,
- $m_1$ die Masse des mit Wasser gefüllten Pyknometers,
- $m_2$ die Masse des Pyknometers mit dem Festkörper,
- $m_3$ die Masse des Pyknometers mit dem Festkörper, aufgefüllt mit Wasser,
- $\rho_W$ die Dichte des Wassers bei der entsprechenden Temperatur,
- $\rho_F$ die Dichte des Festkörpers.

Dann ergibt sich die Dichte des Festkörpers zu:

$$\rho_F = \frac{(m_2 - m_0)}{(m_1 - m_0) - (m_3 - m_2)} \cdot \rho_W$$

Es wird pro Muster jeweils eine Dreifachbestimmung durchgeführt. Es ist zu beachten, dass bei diesem Verfahren die Rohdichte (bei porösen Festkörpern, vorliegend einem Schaum, die Dichte basierend auf dem Volumen einschließlich der Porenräume) erhalten wird.

Schnellverfahren Dichtebestimmung über den Masseauftrag und die Schichtdicke (Messmethode A5b)

Das Raumgewicht beziehungsweise die Dichte ρ einer beschichteten Selbstklebemasse wird über das Verhältnis vom Flächengewicht zu der jeweiligen Schichtdicke bestimmt:

$$\rho = \frac{m}{V} = \frac{MA}{d} \qquad [\rho] = \frac{[kg]}{[m^2]\cdot[m]} = \left[\frac{kg}{m^3}\right]$$

MA = Masseauftrag/Flächengewicht (ohne Linergewicht) in [kg/m$^2$]
d = Schichtdicke (ohne Linerdicke) in [m]

Auch bei diesem Verfahren wird die Rohdichte erhalten.
Diese Dichtebestimmung eignet sich insbesondere zur Bestimmung der Gesamtdichte fertiger, auch mehrschichtiger, Produkte.

Messmethoden (insbesondere Haftklebemassen):

180° Klebkrafttest (Messmethode H1):

Ein 20 mm breiter Streifen eines erfindungsgemäßen Klebebands wurde auf Stahlplatten aufgebracht, die zuvor zweimal mit Aceton und einmal mit Isopropanol gewaschen wurden. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180° vom Substrat abgezogen. Alle Messungen wurden bei Raumtemperatur durchgeführt.
Die Messergebnisse sind in N/cm angegeben und sind gemittelt aus drei Messungen. Analog wurde die Klebkraft auf Polyethylen (PE) und Lack bestimmt. Als Lack wurde - auch für Beispiele gemessen nach Messmethode H2 - jeweils der Lack Uregloss® Colorless (Produkt-Nr. FF79-0060 0900) der Firma BASF verwendet.

90° Klebkraft Stahl - offene und abgedeckte Seite (Messmethode H2):

Die Bestimmung der Klebkraft Stahl erfolgt bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wird vor der Messung gereinigt und konditioniert. Dazu wird die Platte zunächst mit Aceton abgewischt und danach 5 Minuten an der Luft liegen gelassen, damit das Lösungsmittel abdampfen kann. Die dem Prüfuntergrund abgewandte Seite des Dreischichtverbundes wurde dann mit einer 50 µm Aluminiumfolie abgedeckt, wodurch verhindert wird, dass sich das Muster bei der Messung dehnt. Danach erfolgte das Anrollen des Prüfmusters auf den Stahluntergrund. Hierzu wurde das Tape mit einer 2 kg Rolle fünfmal hin und her, bei einer Aufrollgeschwindigkeit von 10 m/min, überrollt. Unmittelbar nach dem Anrollen wurde die Stahlplatte in eine spezielle Halterung geschoben, die es ermöglicht, das Muster in einem Winkel von 90° senkrecht nach oben abzuziehen. Die Klebkraftmessung erfolgte mit einer Zwick-Zugprüfmaschine. Beim Applizieren der abgedeckten Seite auf die Stahlplatte wird die offene Seite des Dreischichtverbundes zunächst gegen die 50 µm Aluminiumfolie kaschiert, das Trennmaterial entfernt und auf die Stahlplatte geklebt, analog angerollt und vermessen.
Die Messergebnisse beider Seiten, offen und abgedeckt, sind in N/cm angegeben und sind gemittelt aus drei Messungen.

Scherstandzeit (Haftklebemasse auf PET-Folie, Messmethode H3):

Ein 13 mm breiter und mehr als 20 mm (beispielsweise 30 mm) langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm x 13 mm (Länge x Breite), wobei das Klebeband die Prüfplatte am Rand überragt (beispielsweise um 10 mm entsprechend oben angegebener Länge von 30 mm). Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigt.
Bei Raumtemperatur wurde ein Gewicht von 1 kg an dem überstehenden Ende des Klebebandes befestigt. Die Messung wird bei Normalklima (23 °C +/- 1 °C, 55 % +/- 5 % Luftfeuchtigkeit) und bei 70 °C in einem Wärmeschrank durchgeführt, wobei für diese Messung die Probe mit einem Gewicht von 0,5 kg belastet wurde.

Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

Scherstandzeit - offene und abgedeckte Seite (Klebebandartikel, Messmethode H4):

Die Musterpräparation erfolgte in einem Prüfklima von 23 °C +/- 1 °C Temperatur und 50 % +/- 5 % rel. Luftfeuchte. Das Prüfmuster wurde auf 13 mm zugeschnitten und auf eine Stahlplatte geklebt. Die Verklebungsfläche beträgt 20 mm x 13 mm (Länge x Breite). Vor der Messung wurde die Stahlplatte gereinigt und konditioniert. Dazu wird die Platte zunächst mit Aceton abgewischt und danach 5 Minuten an der Luft liegen gelassen, damit das Lösungsmittel abdampfen kann. Nach dem Verkleben wurde die offene Seite mit einer 50 μm Aluminiumfolie verstärkt und mit einer 2 kg Rolle zweimal hin und her überrollt. Anschließend wurde eine Gurtschlaufe am überstehenden Ende des Dreischichtverbundes angebracht. Das Ganze wurde dann an einer geeigneten Vorrichtung aufgehängt und mit 10 N belastet. Die Aufhängvorrichtung ist so beschaffen, dass das Gewicht die Probe in einem Winkel von 179° +/- 1 ° belastet. Dadurch ist sichergestellt, dass sich der Dreischichtverbund nicht von der Plattenunterkante abschälen kann. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wird die offene Seite zunächst mit der 50 μm Aluminiumfolie verstärkt, das Trennmaterial entfernt und auf die Prüfplatte analog der Beschreibung geklebt. Die Messung wird bei Normalklima (23 °C, 55 % Luftfeuchtigkeit) durchgeführt.

Dynamische Scherfestigkeit (Messmethode H5):

Ein quadratisches Klebeband mit einer Kantenlänge von 25 mm, das beidseitig mit der gleichen Klebemasse ausgerüstet ist, wird zwischen zwei Stahlplatten verklebt und 1 Minute lang mit 0,9 kN angedrückt (Kraft P). Nach einer Lagerung von 24 h wird der Verbund in einer Zugprüfmaschine der Firma ZWICK mit 50 mm/min bei 23 °C und 50% rel. Feuchte so getrennt, dass die beiden Stahlplatten unter einem Winkel von 180° auseinander gezogen werden. Die Maximalkraft wird in $N/cm^2$ ermittelt.

Dynamisch Mechanischer Analyse (DMA) (Messmethode H6)

Die komplexe Viskosität kann wie die Größen Speichermodul (G') und Verlustmodul (G") mittels Dynamisch Mechanischer Analyse (DMA) ermittelt werden.

Die Messungen können mit einem schubspannungsgesteuerten Rheometer (DSR 200 N der Firma Rheometric Scientific) im Oszillationsversuch bei einer sinusförmig oszillierenden Scherbeanspruchung in einer Platte-Platte-Anordnung erfolgen. Die komplexe Viskosität η* ist folgendermaßen definiert: $\eta^* = G^* / \omega$

(G* = komplexer Schubmodul, ω = Winkelfrequenz).

Die weiteren Definitionen lauten: $G^* = \sqrt{(G')^2 + (G'')^2}$

(G" = Viskositätsmodul (Verlustmodul), G' = Elastizitätsmodul (Speichermodul)).

$G'' = \tau/\gamma \cdot \sin(\delta)$ (τ = Schubspannung, γ = Deformation, δ = Phasenwinkel = Phasenverschiebung zwischen Schubspannungs- und Deformationsvektor).

$G' = \tau/\gamma \cdot \cos(\delta)$ (τ = Schubspannung, γ = Deformation, δ = Phasenwinkel = Phasenverschiebung zwischen Schubspannungs- und Deformationsvektor). $\omega = 2\pi \cdot f$ (f = Frequenz).

Kommerziell erhältliche, eingesetzte Chemikalien

| *Chemische Verbindung* | *Handelsname* | *Hersteller* | *CAS-Nr.* |
|---|---|---|---|
| SBS (76 Gew.-% Zweiblock, Blockpolystyrolgehalt: 31 Gew.-%) | Kraton® D 1118 E | Kraton Polymers | 9003-55-8 |
| SBS (16 Gew.-% Zweiblock, Blockpolystyrolgehalt: 31 Gew.-%) | Kraton® D 1101 | Kraton Polymers | 9003-55-8 |
| SB (100 Gew.-% Zweiblock, Blockpolystyrolgehalt: 18 Gew.%) | Solprene® 1205 | Dynasol | 9003-55-8 |

(fortgesetzt)

| *Chemische Verbindung* | *Handelsname* | *Hersteller* | *CAS-Nr.* |
|---|---|---|---|
| Kohlenwasserstoffharz (auf $C_5$-und $C_9$-Basis mit geringem Aromatenanteil, (Erweichungspunkt (Ring & Ball) 95 °C) | Escorez™ 2203 | Exxon Mobile | 64742-16-1 |
| $\alpha$-Pinenharz (Erweichungstemperatur: 115 °C) | Dercolyte A 115 | DRT | 25766-18-1 |
| flüssiges Kohlenwasserstoffharz ($C_5$-Basis) | Wingtack® 10 | Cray Valley | 26813-14-9 |
| naphthenisches Öl | Shellflex® 371 | Shell | 64742-2-5 |
| 2,2'-Azobis(isobutyronitril) (AIBN) | Vazo® 64 | DuPont | 78-67-1 |
| Bis-(4-*tert*-butylcyclohexyl)peroxydicarbonat | Perkadox® 16 | Akzo Nobel | 15520-11-3 |
| 3,4-Epoxycyclohexylmethyl-3,4-epoxycyclohexancarboxylat | Uvacure® 1500 | Cytec Industries Inc. | 2386-87-0 |
| 2,2'-Azobis(2-methylbutyronitril) | Vazo® 67 | DuPont | 13472-08-7 |
| Polyacrylat, harzmodifiziert | Aroset™ PS 5145 | Ashland | - |
| Resorcinol bis(diphenyl Phosphat) | Reofos® RDP | Chemtura | 57583-54-7 |
| Pentaerythrittetraglycidether | Polypox® R16 | UPPC AG | 3126-63-4 |
| *N,N,N'*-Trimethyl-*N'*-hydroxyethyl bisaminoethylether | Jeffcat® ZF-1 0 | Huntsman | 83016-70-0 |
| Triethylentetramin | Epikure 925 | Hexion Speciality Chemicals | 112-24-3 |
| *N'*-(3- (Dimethylamino)propyl)-*N,N*-dimethyl-1,3-propandiamin | Jeffcat® Z-130 | Huntsman | 6711-48-4 |
| Terpenphenolharz (Erweichungspunkt 110 °C; $M_w$ = 500 bis 800 g/mol; D = 1,50) | Dertophene® T110 | DRT resins | 25359-84-6 |
| Mikroballons (MB) (trocken-unexpandierte Mikrosphären, Durchmesser 9 bis 15 $\mu$m, Expansions-Starttemperatur 106 bis 111 °C, TMA-Dichte $\leq$ 25 kg/$m^3$) | Expancel® 051 DU | Expancel Nobel Industries | |
| alle Spezifikationsangaben bei 20 °C; Epikure® auch vertrieben unter den Handelsbezeichnungen Epi-Cure® und Bakelite® EPH | | | |

Die Ring- und Ball-Methode ist die übliche Methode zur Feststellung der Erweichungspunkte. Einzelheiten können der ASTM E 28 und der DIN EN 1238 entnommen werden, auf die hiermit ausdrücklich Bezug genommen wird.

Die Expansionsfähigkeit der Mikroballons kann durch die Bestimmung der TMA-Dichte [kg/$m^3$] beschrieben werden (Stare Thermal Analysis System der Firma Mettler Toledo; Heizrate 20 °C/min). Die TMA-Dichte ist hierbei die minimal erreichbare Dichte bei einer bestimmten Temperatur $T_{max}$ unter Normaldruck, bevor die Mikroballons kollabieren.

I. Herstellung der Haftklebemasse PSA 1 bis PSA 9

Im Folgenden wird die Präparation der Ausgangspolymere beschrieben. Die Synthesekautschukhaftklebemassebeispiele PSA 1 bis PSA 6 wurden in Lösung hergestellt, auf eine 23 $\mu$m dicke geätzte PET-Folie beschichtet und anschließend getrocknet. Der Masseauftrag betrug jeweils 50 g/$m^2$. Das acrylatbasierende Vergleichsbeispiel PSA 8 wurde konventionell über eine freie radikalische Polymerisation in Lösung hergestellt.

Vergleichsbeispiel vernetzte Synthesekautschukhaftklebemasse (PSA 7):

Für dieses Vergleichsbeispiel PSA 7 wurde die Haftklebemasse PSA 1 verwendet, die nach dem Ausstreichen und Trocknen noch zusätzlich mittels Elektronenstrahlhärtung (ESH) vernetzt wird. Hierzu wurde zur Elektronenstrahlhärtung eine Anlage der Firma ELECTRON CROSSLINKING AB (Halmstad, Schweden) verwendet und eine Beschleunigerspannung von 220 keV sowie eine Dosis von 35 kGy bei einer Bahngeschwindigkeit von 3 m/min verwendet.

Tabelle 1: Synthesekautschukhaftklebemassen PSA 1 bis PSA 7 (jeweils Gew.-%)

| | 1 | 2 | 3 | 4 | Vergleichsbeispiel 5 | Vergleichsbeispiel 6 | Vergleichsbeispiel 7[a)] |
|---|---|---|---|---|---|---|---|
| Kraton D 1101 | 33,0 | - | 33,0 | 25,0 | 50,0 | - | 33,0 |
| Kraton D 1118 | 17,0 | 17,0 | - | 25,0 | - | - | 17,0 |
| Vector 4113 | - | 33,0 | - | - | - | - | - |
| Solprene 1205 | - | - | 17,0 | - | - | 50,0 | - |
| Escorez 2203 | 48,0 | 48,0 | 48,0 | - | 48,0 | 48,0 | 48,0 |
| Dercolyte A 115 | - | - | - | 48,0 | - | - | - |
| Wingtack 10 | - | - | - | 2,0 | - | - | - |
| Shellflex 371 | 2,0 | 2,0 | 2,0 | - | 2,0 | 2,0 | 2,0 |
| [a)] Die Haftklebemasse PSA 7 wurde ESH-vernetzt (Beschleunigerspannung: 220 keV; Dosis: 35 kGy) | | | | | | | |

Vergleichsbeispiel Polyacrylathaftkleber (PSA 8):

Ein für radikalische Polymerisationen konventioneller 100 L-Glasreaktor wurde mit 2,0 kg Acrylsäure, 25,0 kg Butylacrylat, 13,0 kg 2-Ethylhexylacrylat und 26,7 kg Aceton/ Benzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/ Benzin 60/95 (1:1) Gemisch verdünnt. Zur Reduktion der Restinitiatoren wurden nach 8 und nach 10 h jeweils 90 g Bis-(4-*tert*-butylcyclohexyl)peroxydicarbonat hinzugegeben. Die Reaktion wurde nach 24 h Reaktionszeit abgebrochen und auf Raumtemperatur abgekühlt.

Anschließend wurde das Polyacrylat mit 0,2 Gew.-% Uvacure® 1500 abgemischt, auf einen Feststoffgehalt von 30 % mit Aceton verdünnt und dann aus Lösung auf eine silikonisierte Trennfolie (50 µm Polyester) beziehungsweise auf eine 23 µm dicke geätzte PET-Folie beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C) Der Masseauftrag betrug 50

Vergleichsbeispiel harzmodifizierter Polyacrylathaftkleber (PSA 9):

Die harzmodifizierte Polyacrylathaftklebemasse Aroset™ PS 5145 der Firma Ashland (Produktnummer 371855, Lösung mit Feststoffgehalt von ca. 60 Gew.-%, fertig abgemischt mit Aluminiumacetylacetonat, CAS-Nr. 13963-57-0, als Vernetzer) wurde auf einen Feststoffgehalt von 30 % mit Aceton verdünnt und dann aus Lösung auf eine silikonisierte Trennfolie (50 µm Polyester) beziehungsweise auf eine 23 µm dicke geätzte PET-Folie beschichtet. (Beschichtungsgeschwindigkeit 2,5 m/min, Trockenkanal 15 m, Temperaturen Zone 1: 40 °C, Zone 2: 75 °C, Zone 3: 100 °C, Zone 4: 115 °C) Der Masseauftrag betrug 50

Tabelle 2: Klebtechnische Daten der Haftklebemassen PSA 1 bis PSA 8 mit einem Masseauftrag von 50 g/m$^2$ auf einer 23 µm dicken geätzten PET-Folie

| | Klebkraft Stahl [N/cm] | Klebkraft PE [N/cm] | SSZ RT [min] | SSZ 70°C [min] |
|---|---|---|---|---|
| PSA 1 | 8,5 | 3,5 | > 10.000 | > 10.000 |

(fortgesetzt)

| | Klebkraft Stahl [N/cm] | Klebkraft PE [N/cm] | SSZ RT [min] | SSZ 70°C [min] |
|---|---|---|---|---|
| PSA2 | 10,9 | 6,4 | > 10.000 | 3.400 |
| PSA 3 | 9,4 | 4,1 | > 10.000 | 7.900 |
| PSA 4 | 9,2 | 4,8 | > 10.000 | > 10.000 |
| PSA 5 | 7,5 | 1,2 | 6.000 (A) | 1.200 (A) |
| PSA 6 | 10,4 | 5,5 | 4.500 | 200 |
| PSA 7 | 3,8 | 0,5 | > 10.000 | > 10.000 |
| PSA 8 | 4,4 | 1,0 | > 10.000 | > 10.000 |
| PSA 9 | 13,0 | 4,5 | 3.000 | 60 |

Die Klebkraftmessungen erfolgten in einem Winkel von 180° nach Messmethode H1.

Die Messung der Scherstandzeiten SSZ erfolgte nach Messmethode H3. Sofern keine Angaben zum Bruchbild angegeben sind, liegt ein kohäsives Versagen der Haftklebemasse vor. A : Adhäsionsbruch

II Herstellung der Ausgangspolymere für die viskoelastischen Polyacrylatschaumträger VT 1 bis VT 5

Im Folgenden wird die Präparation der Ausgangspolymere beschrieben. Die untersuchten Polymere werden konventionell über eine freie radikalische Polymerisation in Lösung hergestellt.

Basispolymer VT 1

Ein für radikalische Polymerisationen konventioneller Reaktor wurde mit 27 kg 2-Ethylhexylacrylat, 27 kg n-Butylacrylat, 4,8 kg Methylacrylat, 0,6 kg Acrylsäure, 0,6 kg 2-Hydroxyethylmethacrylat (HEMA) und 40 kg Aceton/ Isopropanol (93:7) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h wurden erneut 30 g AIBN zugegeben und nach 4 h wurde mit 10 kg Aceton/Isopropanol Gemisch verdünnt.
Nach 5 sowie nach 7 h wurde jeweils mit 90 g Bis-(4-*tert*-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen K-Wert von 69, einen Feststoffgehalt von 54,6 %, ein mittleres Molekulargewicht von $M_w$ = 819.000 g/mol, Polydispersität ($M_w/M_n$) = 7,6 und eine statische Glasübergangstemperatur von Tg = -37,7 °C.

Basispolymer VT 2

Ein für radikalische Polymerisationen konventioneller Reaktor wurde mit 54,4 kg 2-Ethylhexylacrylat, 20,0 kg Methylacrylat,5,6 kg Acrylsäure und 53,3 kg Aceton/ Isopropanol (94:6) befüllt. Nach 45minütiger Durchleitung von Stickstoffgas unter Rühren wurde der Reaktor auf 58 °C hochgeheizt und 40 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 1 h wurden erneut 40 g 2,2'-Azobis(2-methylbutyronitril) zugegeben und nach 4 h wurde mit 10 kg Aceton/Isopropanol-Gemisch (94:6) verdünnt.
Nach 5 sowie nach 7 h wurde jeweils mit 120 g Bis-(4-*tert*-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen K-Wert von 58,8, einen Feststoffgehalt von 55,9 %, ein mittleres Molekulargewicht von $M_w$ = 746.000 g/mol, Polydispersität ($M_w/M_n$) = 8,9 und eine statische Glasübergangstemperatur von Tg = -35,6 °C.

Basispolymer VT 3

Während der Polymerisation von VT 2 wurden zusätzlich noch 10 Gew.-% (bezogen auf Polymer fest) Aerosil R 972 eingesetzt.
Das Polyacrylat hat einen K-Wert von 58,8, einen Feststoffgehalt von 58,2 %, ein mittleres Molekulargewicht von $M_w$ = 746.000 g/mol, Polydispersität ($M_w/M_n$) = 8,9 und eine statische Glasübergangstemperatur von $T_g$ = -35,4 °C.

Basispolymer VT 4

Ein für radikalische Polymerisationen konventioneller Reaktor wurde mit 24,0 kg 2-Ethylhexylacrylat, 53,6 kg Methylacrylat,2,4 kg Acrylsäure und 53,3 kg Aceton/ Isopropanol (96:4) befüllt. Nach 45minütiger Durchleitung von Stickstoffgas unter Rühren wurde der Reaktor auf 58 °C hochgeheizt und 40 g AIBN hinzugegeben. Anschließend wurde das äußere Heizbad auf 75 °C erwärmt und die Reaktion konstant bei dieser Außentemperatur durchgeführt. Nach 1 h wurden erneut 40 g AIBN zugegeben und nach 4 h wurde mit 10 kg Aceton/Isopropanol-Gemisch (96:4) verdünnt.
Nach 5 sowie nach 7 h wurde jeweils mit 120 g Bis-(4-*tert*-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen K-Wert von 77,8, einen Feststoffgehalt von 55,9 %, ein mittleres Molekulargewicht von $M_w$ = 1.040.000 g/mol, Polydispersität ($M_w/M_n$) = 13,3 und eine statische Glasübergangstemperatur von Tg = -45,1 °C.

Basispolymer VT 5

Ein für radikalische Polymerisationen konventioneller Reaktor wurde mit 30 kg 2-Ethylhexylacrylat, 67 kg n-Butylacrylat, 3 kg Acrylsäure, 0,5 kg und 66 kg Aceton/Isopropanol (96:4) befüllt. Nach 45minütiger Durchleitung von Stickstoffgas unter Rühren wurde der Reaktor auf 58 °C hochgeheizt und 50 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 1 h wurden erneut 50 g 2,2'-Azobis(2-methylbutyronitril) zugegeben und nach 4 h wurde mit 20 kg Aceton/Isopropanol-Gemisch (96:4) verdünnt.
Nach 5 sowie nach 7 h wurde jeweils mit 150 g Bis-(4-*tert*-butylcyclohexyl)-peroxydicarbonat nachinitiiert und mit 23 kg Aceton/Isopropanol-Gemisch (96:4) verdünnt. Nach 22 h Reaktionszeit wurde die Polymerisation abgebrochen und auf Raumtemperatur abgekühlt. Das Polyacrylat hat einen K-Wert von 75,1, einen Feststoffgehalt von 50,2 %, ein mittleres Molekulargewicht von $M_w$ = 1.480.000 g/mol, Polydispersität ($M_w/M_n$) = 16,1 und eine statische Glastemperatur von Tg = -38,5 °C.

III Herstellung von Mikroballonmischungen

Die Mikroballons werden in ein Behältnis gegeben, in welches Reofos® RDP als flüssige Komponente (Dispergiermittel) gemäß der Angabe bei den einzelnen Beispielen vorgelegt wurde. In einem Planetenrührwerk der Firma PC-LABORSYSTEM bei einem Druck von 5 mbar und einer Drehzahl von 600 rpm für 30 min gerührt.

Verfahren 1: Aufkonzentration / Herstellung der Polyacrylathotmelts

Die Acrylatcopolymere (Basispolymere VT 1 bis VT 5) werden mittels Einschneckenextruder (Aufkonzentrationsextruder, BERSTORFF GmbH, Deutschland) weitestgehend vom Lösemittel befreit (Restlösemittelgehalt $\leq$ 0,3 Gew.-%; vergleiche bei den einzelnen Beispielen). Exemplarisch sind hier die Parameter der Aufkonzentration des Basispolymeren VT 1 dargestellt. Die Drehzahl der Schnecke betrug 150 U/min, der Motorstrom 15 A, es wurde ein Durchsatz von 60,0 kg flüssig/h realisiert. Zur Aufkonzentration wurde an drei verschiedenen Domen ein Vakuum angelegt. Die Unterdrücke betrugen jeweils zwischen 20 mbar und 300 mbar. Die Austrittstemperatur des aufkonzentrierten Hotmelts liegt bei ca. 115 °C. Der Feststoffgehalt betrug nach diesem Aufkonzentrationsschritt 99,8 %.

Verfahren 2:Herstellung geschäumte Masse

Die Schäumung findet in einer Versuchsanlage statt, die der Darstellung in Fig. 2 entspricht.
Das entsprechende Basispolymer K (VT 1 bis VT 5) wird in einem Fütterextruder 1 (Einschneckenförderextruder der Firma TROESTER GmbH & Co KG, Deutschland) aufgeschmolzen und mit diesem als Polymerschmelze über einen beheizbaren Schlauch 11 in einen Planetwalzenextruder 2 (PWE) der Firma ENTEX (Bochum) gefördert (es wurde insbesondere ein PWE mit vier unabhängig voneinander heizbaren Modulen $T_1$, $T_2$, $T_3$, $T_4$ eingesetzt). Über die Dosieröffnung 22 wird nun das geschmolzene Harz zugegeben. Weiterhin besteht die Möglichkeit, zusätzliche Additive oder Füllstoffe, wie zum Beispiel Farbpasten, über weitere vorhandene Dosierstellen zuzuführen. An Punkt 23 wird der Vernetzer hinzugefügt. Alle Komponenten werden zu einer homogenen Polymerschmelze gemischt.
Mittels einer Schmelzepumpe 24a und eines beheizbaren Schlauches 24b wird die Polymerschmelze in einen Doppelschneckenextruder 3 (Firma BERSTORFF) überführt (Eingabeposition 33). An Position 34 wird die Beschleunigerkomponente hinzugefügt. Anschließend wird die gesamte Mischung in einem Vakuumdom V bei einem Druck von 175 mbar von allen Gaseinschlüssen befreit (Kriterium für Gasfreiheit siehe oben). Im Anschluss an die Vakuumzone befindet sich auf der Schnecke ein Blister B, welcher einen Druckaufbau in dem darauf folgenden Segment S ermöglicht. Durch geeignete Steuerung der Extruderdrehzahl und der Schmelzepumpe 37a wird in dem Segment S zwischen Blister

B und Schmelzepumpe 37a ein Druck von größer 8 bar aufgebaut, an der Dosierstelle 35 die Mikroballonmischung (Mikroballons eingebettet in das Dispergierhilfsmittel gemäß der Angaben bei den Versuchsreihen) hinzugefügt und mittels eines Mischelements homogen in die Vormischung eingearbeitet. Die entstandene Schmelzmischung wird in eine Düse 5 überführt.

Nach Verlassen der Düse 5, also nach Druckabfall, expandieren die eingearbeiteten Mikroballons, wobei durch den Druckabfall eine scherungsarme, insbesondere scherungsfreie, Abkühlung der Polymermasse erfolgt. Es entsteht eine geschäumte Selbstklebemasse S, welche anschließend zwischen zwei Trennmaterialien, insbesondere zwischen einem Trennmaterial, welches erneut nach dem Entfernen wiederverwendet werden kann (Prozessliner) beschichtet und mittels eines Walzenkalanders 4 bahnförmig ausgeformt wird.

Tabelle 3: Viskoelastische Polyacrylatschaumträger VT 1 bis VT 5

| Beispiel | | | | VT 1 | VT 2 | VT 3 | VT 4 | VT 5 |
|---|---|---|---|---|---|---|---|---|
| Komponenten | Polyacrylat | | [w-%] | 97,4 | 63,1 | 97,0 | 97,0 | 97,1 |
| | Dertophene T110 | | | - | 31,0 | - | - | - |
| | Expancel 051 DU 40 | | | 2,0 | 2,0 | 2,0 | 2,0 | 2,0 |
| | Polypox R16 | | | 0,143 | 0,139 | 0,149 | 0,139 | 0,222 |
| | Jeffcat ZF-10 | | | 0,140 | - | - | - | - |
| | Epikure 925 | | | - | 0,144 | - | 0,144 | 0,144 |
| | Jeffcat Z-130 | | | - | - | 0,165 | - | - |
| | Reofos RDP | | | 0,66 | 0,66 | 0,66 | 0,66 | 0,48 |
| Aufbau | Dicke | | [μm] | 1091 | 1109 | 1123 | 1130 | 1134 |
| | Dichte (I.2) | | [kg/m³] | 770 | 753 | 744 | 752 | 680 |
| Performance | SSZ [min] | RT 20N | [min] | 1016 | 1275 | 1753 | 3309 | 3147 |
| | | 70°C 10N | | 20 | 28 | 39 | 31 | 2954 |
| | Klebkraft Stahl [N/cm] | sofort | [N/cm] | 18,3 A | 24,5 A | 31,0 A | 36,5 A | 21,0 A |
| | | 3d | | 30,6 A | 33,4 A | 43,1 A | 48,2 A | 64,3 K |
| | | 14d | | 29,9 A | 35,1 A | 42,7 A | 49,2 A | 65,2 K |

Dichte: Messmethode A5a, Klebkraft: Messmethode H2 (A bedeutet Adhäsionsbruch; K bedeutet Kohäsionsbruch), SSZ (Scherstandzeit): Messmethode H4
Epikure® auch vertrieben unter den Handelsbezeichnungen Epi-Cure® und Bakelite® EPH

IV Dreischichtige Haftklebebandprodukte MT 1 bis V-MT 26

Sofern nicht weiter angegeben wird, sind auf beide Seiten des viskoelastischen Trägers die gleiche Haftklebemasse beschichtet wurden. Der Masseauftrag der jeweiligen Haftklebemasseschicht auf dem viskoelastischen Träger beträgt in allen Fällen 50

Um die Verankerung der Haftklebemasse auf der ausgeformten, viskoelastischen Trägerschicht zu verbessern, werden sowohl die Haftklebemasse als auch der viskoelastische Träger vor dem Kaschierschritt mittels Corona behandelt (Corona-Anlage der Firma VITAPHONE, Dänemark, 100 W·min/m$^2$). Diese Behandlung führt nach der Herstellung des Dreischichtverbundes zu einer verbesserten chemischen Anbindung an die viskoelastische Trägerschicht. Die Bahngeschwindigkeit bei Durchlaufen der Kaschieranlage beträgt 30 m/min. Vor dem Kaschieren wird ggf. ein anti-adhäsiver Träger, insbesondere ein Prozessliner ausgedeckt und das fertige Dreischichtprodukt mit einem verbleibenden zweiten anti-adhäsiven Träger aufgewickelt.

Im Folgenden werden konkrete Beispiele der erfindungsgemäßen Klebebänder (MT) sowie nicht-erfindungsgemäßer Klebebänder (V-MT) vorgestellt, ohne dass durch die Wahl der angegebenen Formulierungen, Konfigurationen, Prozessparameter und/oder Produktdesigns die Erfindung unnötig eingeschränkt werden soll.

Tabelle 4: Beispiele MT 1 bis MT 10 (Variation des viskoelastischen Polyacrylatschaumträgerschicht)

| Bsp. | Haftklebemasse | Viskoel. Träger | KK Stahl [N/cm] | KK PE [N/cm] | KK Lack [N/cm] | SSZ 10 N, RT [min] | SSZ 10 N, 70 °C [min] | Dyn. Scherfestigkeit [N/cm²] |
|---|---|---|---|---|---|---|---|---|
| MT 1 | PSA 1 | VT 1 | 50 f.s. | 19 | 48 f.s. | >10.000 | >10.000 | 60 |

(fortgesetzt)

| Bsp. | Haftklebemasse | Viskoel. Träger | KK Stahl [N/cm] | KK PE [N/cm] | KK Lack [N/cm] | SSZ 10 N, RT [min] | SSZ 10 N, 70 °C [min] | Dyn. Scherfestigkeit [N/cm$^2$] |
|---|---|---|---|---|---|---|---|---|
| MT 2 | PSA 1 | VT 2 | 50 f.s. | 23 | 48 f.s. | >10.000 | 1.200 | 63 |
| MT 3 | PSA 1 | VT 3 | 42 | 17 | 42 | >10.000 | >10.000 | 44 |
| MT 4 | PSA 1 | VT 4 | 50 f.s. | 25 | 48 f.s. | >10.000 | 5.200 | 54 |
| MT 5 | PSA 1 | VT 5 | 50 f.s. | 23 | 48 f.s. | >10.000 | >10.000 | 65 |
| MT 6 | PSA2 | VT 1 | 50 f.s. | 18 | 45 | >10.000 | >10.000 | 48 |
| MT 7 | PSA2 | VT 2 | 42 | 19 | 41 | >10.000 | 1.100 | 60 |
| MT 8 | PSA2 | VT 3 | 39 | 16 | 42 | >10.000 | >10.000 | 44 |
| MT 9 | PSA2 | VT 4 | 50 f.s. | 24 | 48 f.s. | >10.000 | 5.500 | 52 |
| MT 10 | PSA2 | VT 5 | 50 f.s. | 24 | 48 f.s. | >10.000 | >10.000 | 65 |
| Klebkraft: Messmethode H2, SSZ (Scherstandzeit): Messmethode H4, Dynamische Scherfestigkeit: Messmethode H5<br>f.s.: foam split (kohäsives Spaltens des viskoelastischen Trägers) | | | | | | | | |

Tabelle 5: Beispiele MT 11 bis V-MT 26 (Variation der Haftklebemasse, V-MT sind nicht-erfindungsgemäße Vergleichsbeispiele)

| Bsp. | Haftklebemasse | Viskoel. Träger | KK Stahl [N/cm] | KK PE [N/cm] | KK Lack [N/cm] | SSZ 10 N, RT [min] | SSZ 10 N, 70 °C [min] | Dyn. Scherfestigkeit [N/cm$^2$] |
|---|---|---|---|---|---|---|---|---|
| MT 1 | PSA 1 | VT 1 | 50 f.s. | 19 | 48 f.s. | >10.000 | >10.000 | 60 |
| MT 6 | PSA2 | VT 1 | 50 f.s. | 18 | 45 | >10.000 | >10.000 | 48 |
| MT 11 | PSA 3 | VT 1 | 50 f.s. | 22 | 48 f.s. | >10.000 | >10.000 | 60 |
| MT 12 | PSA4 | VT 1 | 50 f.s. | 21 | 46 | >10.000 | >10.000 | 61 |
| V-MT 13 | PSA 5 | VT 1 | 40 | 14 | 28 | 4.500 (A) | 1.100 (A) | 44 |
| V-MT 14 | PSA 6 | VT 1 | 50 f.s. | 22 | 44 | 8.500 | 200 | 62 |
| V-MT 15 | PSA 7 | VT 1 | 41 | 13 | 41 | 7.500 (A) | 380 (A) | 55 |
| V-MT 16 | PSA 8 | VT 1 | 25 | 3 | 13 | >10.000 | 2.000 | 41 |
| V-MT 17 | PSA 9 | VT 1 | 45 | 11 | 27 | 8.200 | 190 | 62 |
| MT 5 | PSA 1 | VT 5 | 50 f.s | 23 | 48 f.s. | >10.000 | >10.000 | 65 |
| MT 10 | PSA2 | VT 5 | 50 f.s. | 24 | 48 f.s. | >10.000 | >10.000 | 65 |
| MT 18 | PSA 3 | VT 5 | 50 f.s. | 22 | 46 | >10.000 | >10.000 | 62 |
| MT 19 | PSA4 | VT 5 | 50 f.s. | 21 | 48 f.s. | >10.000 | >10.000 | 63 |

(fortgesetzt)

| Bsp. | Haftklebemasse | Viskoel. Träger | KK Stahl [N/cm] | KK PE [N/cm] | KK Lack [N/cm] | SSZ 10 N, RT [min] | SSZ 10 N, 70 °C [min] | Dyn. Scherfestigkeit [N/cm²] |
|---|---|---|---|---|---|---|---|---|
| V-MT 20 | PSA 5 | VT 5 | 38 | 17 | 32 | >10.000 | >10.000 | 45 |
| V-MT 21 | PSA 6 | VT 5 | 50 f.s. | 22 | 42 | 8.500 | 200 | 62 |
| V-MT 22 | PSA 7 | VT 5 | 48 | 16 | 43 | 6.200 (A) | 150 (A) | 63 |
| V-MT 23 | PSA 8 | VT 5 | 23 | 2 | 13 | >10.000 | 2.000 | 40 |
| V-MT 24 | PSA 9 | VT 2 | 44 | 11 | 30 | 8.200 | 320 | 58 |
| V-MT 25 | PSA 9 | VT 5 | 42 | 3 | 30 | 2.000 | 0 | 42 |
| V-MT 26 [a)] | abgedeckte Seite (JL-2) | | 46 | 6 | 45 | 3.000 | 90 | 60 |

Klebkraft: Messmethode H2, SSZ (Scherstandzeit): Messmethode H4, Dynamische Scherfestigkeit: Messmethode H5. Sofern keine Angaben zum Bruchbild angegeben sind, liegt ein kohäsives Versagen der Haftklebemasse vor.
A : Adhäsionsbruch
f.s: foam split (kohäsives Spaltens des viskoelastischen Trägers)
[a)] Es handelt sich bei dem Beispiel V-MT 26 um das Produkt EX 4011 aus der Acrylic *Plus* Tape Series von 3M™. Es handelt sich hierbei um ein doppelseitiges Klebeband mit einem viskoelastischen Polyacrylatschaumträger und zwei unterschiedlichen äußeren Haftklebemasseschichten. Die Haftklebemasse JL-2 der abgedeckten Seite, deren klebtechnischen Daten in der Tabelle 5 dargestellt sind, ist insbesondere für unpolare Oberflächen sowie Automobil- und Pulverlacke ausgelobt.

Wie den Vergleichsbeispielen entnommen werden kann, zeigen die meisten Haftklebemassen keine ausreichende Scherstandzeichen. Vergleichsbeispiel V-MT 20 versagt, weil kein foam split zu beobachten ist, sondern ein Adhäsionsbruch. Für einen solchen gibt es kein Modell, er ist chaotisch und nicht modellierbar. Auf Klebemassen, die einen Adhäsionsbruch zeigen, verzichtet der Fachmann aufgrund des nicht vorhersehbaren Verhaltens.

Tabelle 6: Aufziehverhalten

| Bsp. | Klebkraft Stahl sofort [N/cm] | Klebkraft Stahl 20 min [N/cm] | Klebkraft Stahl 1 d [N/cm] | Klebkraft Stahl 3 d [N/cm] |
|---|---|---|---|---|
| PSA 1 [a)] | 13 | 13 | 14 | 15 |
| VT 5 [a)] | 7 | 8 | 10 | 13 |
| MT 5 | 50 f.s. | 50 f.s. | 50 f.s. | 50 f.s. |
| V-MT 22 | 48 | 48 | 48 | 50 f.s. |
| V-MT 23 | 23 | 23 | 30 | 48 |
| V-MT 26 | 45 | 46 f.s. | 46 f.s. | 46 f.s. |

[a)] Schichtdicke: 50 μm
sofort: < 1 Minute, f.s.: foam split

Aus der Tabelle 6 ist zu erkennen, dass erst die Kombination der erfindungsgemäßen Klebemassen mit dem viskoelastischen Träger ein geschäumtes Klebeband ergibt, welches die Anforderungen nach sehr hohen Sofortklebkräften in Kombination mit einem Trägerspalten (foam split) erfüllt. Die Vergleichsbeispiele hingegen zeigen ein deutliches

Aufziehverhalten auf, wobei erst nach längerer Zeit ein Trägerspalten erreicht werden kann, welches zur besseren Vorhersage von Verklebungen gewünscht ist.

V Dreischichtige Haftklebebandprodukte MT 27 mit asymmetrischem Produkt-aufbau

Das Beispiel MT 27 ist folgendermaßen aufgebaut:

Viskoelastischer Polyacrylatschaumträger:

VT 5 (Dicke: 900 μm; Dichte: 680 kg/$m^3$; zur Schwarzfärbung des Produktes wurde zu der Rezeptur VT 5 noch Ruß hinzugefügt)

Haftklebemasse abgedeckte Seite:

PSA 1 (50 g/$m^2$)

Haftklebemasse offene Seite:

PSA 8 (50 g/$m^2$)

Liner:

Variante I): blauer Polyethylenliner, einseitig mit Silikon beschichtet, geeignet für Hochtemperaturanwendungen nach bereits erfolgter Applikation der offenen Seite Variante II): blauer silikonfreier Polyethylenliner

| Seite | KK Stahl [N/cm] | KK PE [N/cm] | KK Lack [N/cm] | SSZ 10N,RT [min] | SSZ 10 N, 70 °C [min] | Dyn. Scherfestigkeit [N/$cm^2$] |
|---|---|---|---|---|---|---|
| offene | 22 | 2 | 13 | > 10.000 | 2.000 | 41 |
| abgedeckte | 50 f.s | 23 | 48 f.s. | > 10.000 | > 10.000 | 64 |

## Patentansprüche

1. Klebeband mit einem Trägermaterial aus einer acrylatbasierten Schaumschicht, auf die mindestens eine Haftklebemasseschicht aufgebracht ist, wobei die Haftklebemasse

   (a) sich aus einem Gemisch aus zumindest zwei unterschiedlichen Synthesekautschuken, insbesondere auf Basis von Vinylaromatenblockcopolymeren, zusammensetzt,
   (b) ein Harz enthält, welches nicht in den die Schaumschicht bildenden Acrylaten löslich ist und
   (c) chemisch unvernetzt ist.

2. Klebeband nach Anspruch 1,
   **dadurch gekennzeichnet, dass**
   es sich bei der Schaumschicht um eine viskoelastische Schaumschicht handelt.

3. das die Schaumschicht bildende Acrylat ein Polyacrylat ist, erhalten durch eine freie oder kontrollierte radikalische Polymerisation eines oder mehrerer Acrylate und Alkylacrylate.

4. Klebeband nach Anspruch 1 oder 2,
   **dadurch gekennzeichnet, dass**
   das die Schaumschicht bildende Acrylat ein thermisch vernetztes Polyacrylat ist.

5. Klebeband nach zumindest einem der Ansprüche 1 bis 3,
   **dadurch gekennzeichnet, dass**

das die Schaumschicht bildende Acrylat ein Poly(meth)acrylat ist, umfassend

(a1) 70 bis 100 Gew.-% Acrylsäureester und/oder Methacrylsäureester und/oder deren freien Säuren folgender Strukturformel

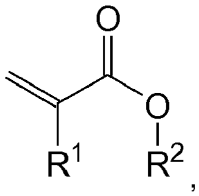

wobei $R^1$ H oder $CH_3$ darstellt und $R^2$ H oder Alkylketten mit 1 bis 14 C-Atomen darstellt;
(a2) 0 bis 30 Gew.-% olefinisch ungesättigte Monomere mit funktionellen Gruppen und
(a3) optional weitere Acrylate und/oder Methacrylate und/oder olefinisch ungesättigte Monomere (vorzugsweise mit einem Anteil zwischen 0 bis 5 Gew.-%), die mit der Komponente (a1) copolymerisierbar sind und eine funktionelle Gruppen aufweisen, die mittels des Kupplungsreagenzes zu einer kovalenten Vernetzung führt.

**6.** Klebeband nach Anspruch 4,
**dadurch gekennzeichnet, dass**
eingesetzt werden
als Monomere (a1) Acrylmomonere, umfassend Acryl- und Methacrylsäureester mit Alkylgruppen, bestehend aus 1 bis 14 C-Atomen, wie Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat und deren verzweigte Isomere wie zum Beispiel 2-Ethylhexylacrylat,
als Monomere (a2) Maleinsäureanhydrid, Itaconsäureanhydrid, Glycidylmethacrylat, Benzylacrylat, Benzylmethacrylat, Phenylacrylat, Phenylmethacrylat, *tert*-Butylphenylacrylat, *tert*-Butylphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat und Tetrahydrofufurylacrylat und/oder
als Monomere (a3) Hydroxyethylacrylat, 3-Hydroxypropylacrylat, Hydroxyethylmethacrylat, 3-Hydroxypropylmethacrylat, 4-Hydroxybutylacrylat, 4-Hydroxybutylmethacrylat, Allylalkohol, Itaconsäure, Acrylamid und Cyanoethylmethacrylat, Cyanoethylacrylat, 6-Hydroxyhexylmethacrylat, *N-tert*-Butylacrylamid, N-Methylolmethacrylamid, N-(Butoxymethyl)methacrylamid, *N*-Methylolacrylamid, N-(Ethoxymethyl)acrylamid, *N*-Isopropylacrylamid, Vinylessigsäure, β-Acryloyloxypropionsäure, Trichloracrylsäure, Fumarsäure, Crotonsäure, Aconitsäure, Dimethylacrylsäure, 4-Vinylbenzoesäure.

**7.** Klebeband nach Anspruch 5,
**dadurch gekennzeichnet, dass**
die Comonomere so gewählt sind, dass die Glasübergangstemperatur $T_{G,A}$ der Polymere unterhalb der Anwendungstemperatur, bevorzugt bei $T_{G,A}$ <= 15 °C liegt.

**8.** Klebeband nach zumindest einem der vorherigen Ansprüche,
**dadurch gekennzeichnet, dass**
der acrylatbasierte Schaumschicht zumindest ein klebrigmachendes Harz zugemischt ist.

**9.** Klebeband nach zumindest einem der vorherigen Ansprüche,
**dadurch gekennzeichnet, dass**
die acrylatbasierten Schaumschicht durch Verwendung von Mikroballons geschäumt wird.

**10.** Klebeband nach zumindest einem der vorherigen Ansprüche,
**dadurch gekennzeichnet, dass**
die acrylatbasierten Schaumschicht vernetzt ist.

**11.** Klebeband nach zumindest einem der vorherigen Ansprüche,
**dadurch gekennzeichnet, dass**

die acrylatbasierten Schaumschicht eine Schichtdicke zwischen 0,3 mm und 5 mm aufweist.

**12.** Klebeband nach zumindest einem der vorherigen Ansprüche,
**dadurch gekennzeichnet, dass**
die Haftklebemasse mindestens zu 70 Gew.-%, vorzugsweise zu 80 Gew.-% ein Gemisch enthält aus

(i) Blockcopolymeren aus einer Mischung aus Blockcopolymeren mit der Struktur I und II

I) A'-B'
II) A-B-A, $(A-B)_n$, $(A-B)_nX$ und/oder $(A-B-A)_nX$, wobei

- X der Rest eines Kopplungsreagenzes ist,
- n eine ganze Zahl zwischen 2 und 10 ist,
- A und A' ein Polymerblock aus einem Vinylaromaten ist,
- B und B' ein Polymerblock ist, gebildet aus Butadien, einem Gemisch aus Butadien und Isopren und/oder einem Gemisch aus Butadien und Styrol und
- A und A' beziehungsweise B und B' gleich oder unterschiedlich sein können,

(ii) mindestens ein Klebharz,

wobei der Anteil der Blockcopolymere I) zwischen 30 und 70 Gew.-% bezogen auf die Gesamtmenge an Blockcopolymeren ist,
wobei der Anteil A bei den Blockcopolymeren II) zwischen 25 und 40 Gew.-% liegt, und wobei die A-B-Einheit innerhalb von zumindest einem der Vinylaromatenblockcopolymeren der Struktur II ein Molekulargewicht $M_w$ von größer 65.000 g/mol aufweist und das Molekulargewicht $M_w$ des gesamten Blockcopolymeren II größer als 130.000 g/mol ist.

**13.** Klebeband nach Anspruch 12,
**dadurch gekennzeichnet, dass**
die Haftklebemasse als Elastomere nur ein Gemisch von Vinylaromatenblockcopolymeren der Strukturen I und IIenthält, wobei das Gemisch aus jeweils einem Vinylaromatenblockcopolymer der Struktur I und einem Vinylaromatenblockcopolymer der Struktur II oder das Gemisch aus mehreren unterschiedlichen Vinylaromatenblockcopolymeren der Strukturen I und II bestehen kann.

**14.** Klebeband nach Anspruch 12 oder 13,
**dadurch gekennzeichnet, dass**
zusätzlich zu den Strukturen I und II ein Blockcopolymer verwendet wird, welches ein durch die allgemeine Formel $Q_n$-Y beschriebenes Multiarm-Blockcopolymer ist.

**15.** Klebeband nach zumindest einem der Ansprüche 12 bis 14,
**dadurch gekennzeichnet, dass**
der Block A ein glasartiger Block mit einer Glasübergangstemperatur (Tg) oberhalb der Raumtemperatur ist, vorzugsweise bei mindestens 40 °C.

**16.** Klebeband nach zumindest einem der Ansprüche 12 bis 15,
**dadurch gekennzeichnet, dass**
der Block B gummiartig ist beziehungsweise ein Weichblock ist mit einem Tg von kleiner als Raumtemperatur, vorzugsweise kleiner als 0 °C.

**17.** Klebeband nach zumindest einem der Ansprüche 12 bis 16,
**dadurch gekennzeichnet, dass**
der Anteil des Vinylaromatenblockcopolymers oder der Vinylaromatenblockcopolymere der Struktur I an der Summe aus den Vinylaromatenblockcopolymeren der Struktur I und II zwischen 30 und 70 Gew.-%, bevorzugt zwischen 50 und 65 Gew.-% liegt.

**18.** Klebeband nach zumindest einem der Ansprüche 12 bis 17,
**dadurch gekennzeichnet, dass**
der oder die Anteil(e) des Vinylaromatenendblocks A an dem Blockcopolymer der Struktur I und/oder der oder die

Anteil(e) der Vinylaromatenendblöcke A und A’ an dem Blockcopolymer der Struktur II zwischen 20 und 40 Gew.-%, bevorzugt zwischen 20 und 33 Gew.-% betragen.

**19.** Klebeband nach zumindest einem der Ansprüche 12 bis 18,
**dadurch gekennzeichnet, dass**
die Haftklebemasse ein erstes Harz mit einem Tg, von mindestens 60 °C enthält, das mit den Elastomerblöcken der Blockcopolymere kompatibel ist, und/oder ein zweites Harz mit einem Tg, von weniger 60 °C enthält, das mit den glasartigen Blöcken der linearen Blockcopolymer und/oder der Multiarm-Blockcopolymere kompatibel ist.

**20.** Klebeband nach zumindest einem der Ansprüche 12 bis 19,
**dadurch gekennzeichnet, dass**
die Haftklebemasse Endblockverstärkerharze wie $\alpha$-Methylstyrolharze enthält.

**21.** Klebeband nach zumindest einem der Ansprüche 12 bis 20,
**dadurch gekennzeichnet, dass**
die Haftklebemasseschicht mit einem Flächengewicht von 40 bis 100 g/$m^2$ auf der viskoelastischen Schaumträgerschicht aufgetragen ist.

**22.** Klebeband nach zumindest einem der Ansprüche 12 bis 21,
**dadurch gekennzeichnet, dass**
das Klebeband aus der viskoelastischen Schaumträgerschicht besteht, auf die einseitig eine Haftklebemasseschicht aufgetragen ist.

**23.** Klebeband nach zumindest einem der vorherigen Ansprüche,
**dadurch gekennzeichnet, dass**
die Klebebanddicken zwischen 100 $\mu$m bis 5000 mm, bevorzugt 250 $\mu$m bis 4000 $\mu$m und besonders bevorzugt 500 bis 3000 $\mu$m liegen.

**24.** Verfahren zur Herstellung eines Klebebandes nach zumindest einem der vorherigen Ansprüche beinhaltend die folgenden Verfahrensschritte:

(i) Herstellung einer viskoelastischen Schaumträgerschicht, die eine Ober- und eine Unterseite aufweist, durch

(a) Bereitstellung einer mittels freier oder kontrollierter radikalischer Polymerisation polymerisierbarer Mischung, umfassend eines oder mehrerer Acrylat- und Alkylacrylatmonomere,
(b) Polymerisation der unter a) genannten Mischung,
(c) thermische Vernetzung und
(d) Schäumung des Polyacrylats und

(ii) Beschichtung einer oder mehrerer Haftklebemassen, von denen zumindest eine erfindungsgemäß

(a) chemisch unvernetzt ist und
(b) ein Gemisch aus Synthesekautschuken enthält,
auf mindestens einer der Hauptseiten des besagten Acrylatschaumträgers, um somit eine Haftklebemasseschicht zu erzeugen.

**25.** Verfahren zur Herstellung eines Klebebandes nach zumindest einem der vorherigen Ansprüche beinhaltend die folgenden Verfahrensschritte:

(i) die Herstellung einer viskoelastischen Schaumträgerschicht, die eine Ober- und eine Unterseite aufweist, durch

(a) Bereitstellung einer mittels freier oder kontrollierter radikalischer Polymerisation polymerisierbarer Mischung, umfassend eines oder mehrerer Acrylat- und Alkylacrylatmonomere,
(b) Polymerisation der unter a) genannten Mischung,
(c) Entfernung des Lösungsmittel
(d) Verarbeitung des Polyacrylats in der Schmelze
(e) in jener Schmelze Compoundierung und Homogenisierung von chemischen und/oder physikalischen

Blähmitteln und thermischen Vernetzern in einem Extruder
(f) thermische Vernetzung sowie
(g) Schäumung des Polyacrylats und

(ii) die Beschichtung einer oder mehrerer Haftklebemassen, von denen zumindest eine erfindungsgemäß

(a) chemisch unvernetzt ist und
(b) ein Gemisch aus Vinylaromatenblockcopolymeren enthält sowie
(c) Harze umfasst, die nicht in einem Polyacrylat löslich sind und somit nicht in die Acrylatschaumträgerschicht migrieren können,
auf mindestens einer der Hauptseiten des besagten Acrylatschaumträgers, um somit eine Haftklebemasseschicht zu erzeugen.

**26.** Verwendung eines Klebebandes nach zumindest einem der vorherigen Ansprüche zur Verklebung auf unpolaren Oberflächen, insbesondere solchen mit einer Oberflächenspannung von kleiner als 45 mN/m, vorzugsweise kleiner als 35 mN/m.

**27.** Verwendung eines Klebebandes nach zumindest einem der vorherigen Ansprüche zur Verklebung von Gummidichtungen, insbesondere EPDM-Gummiprofilen.

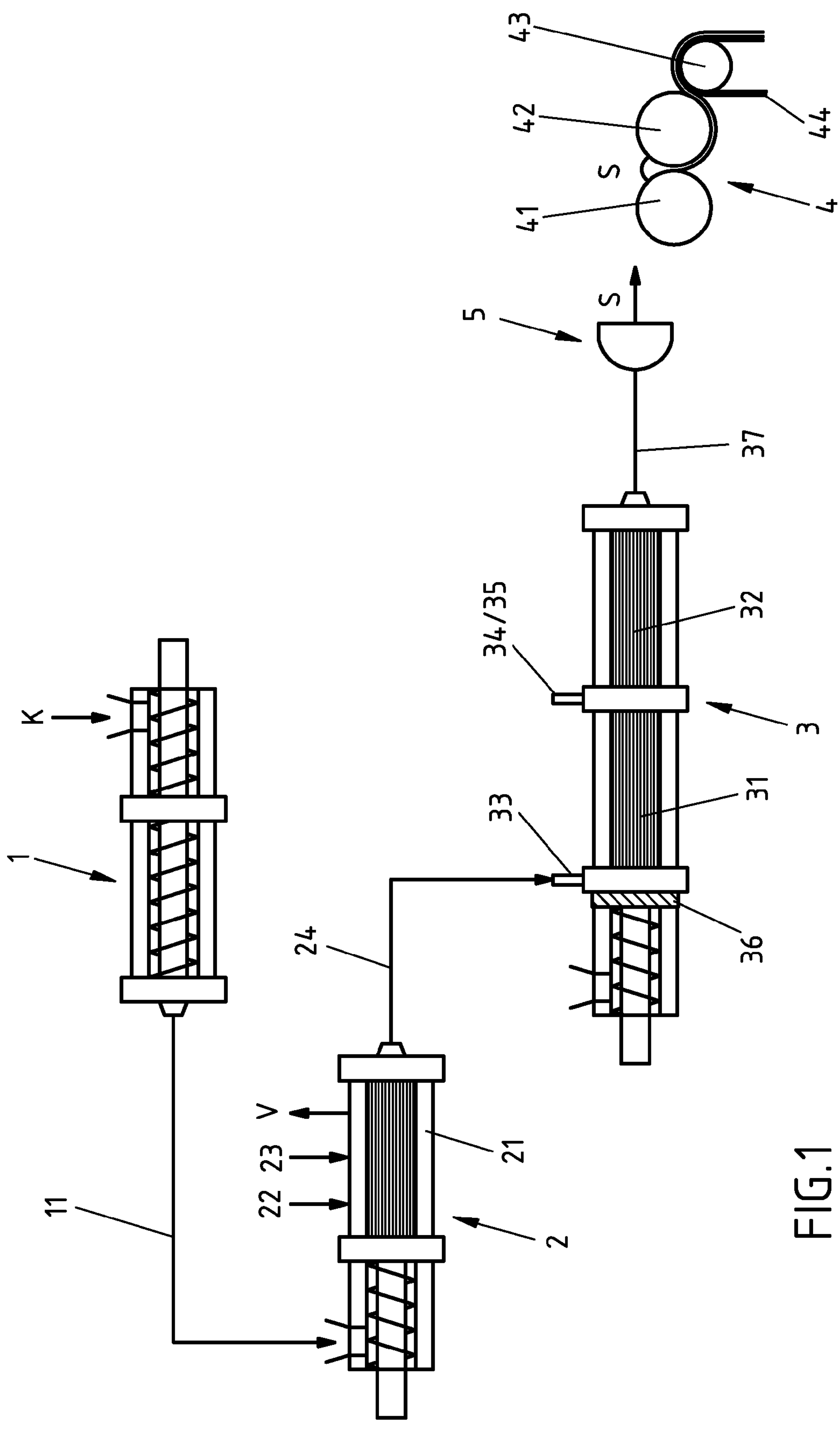


FIG.1

FIG.2

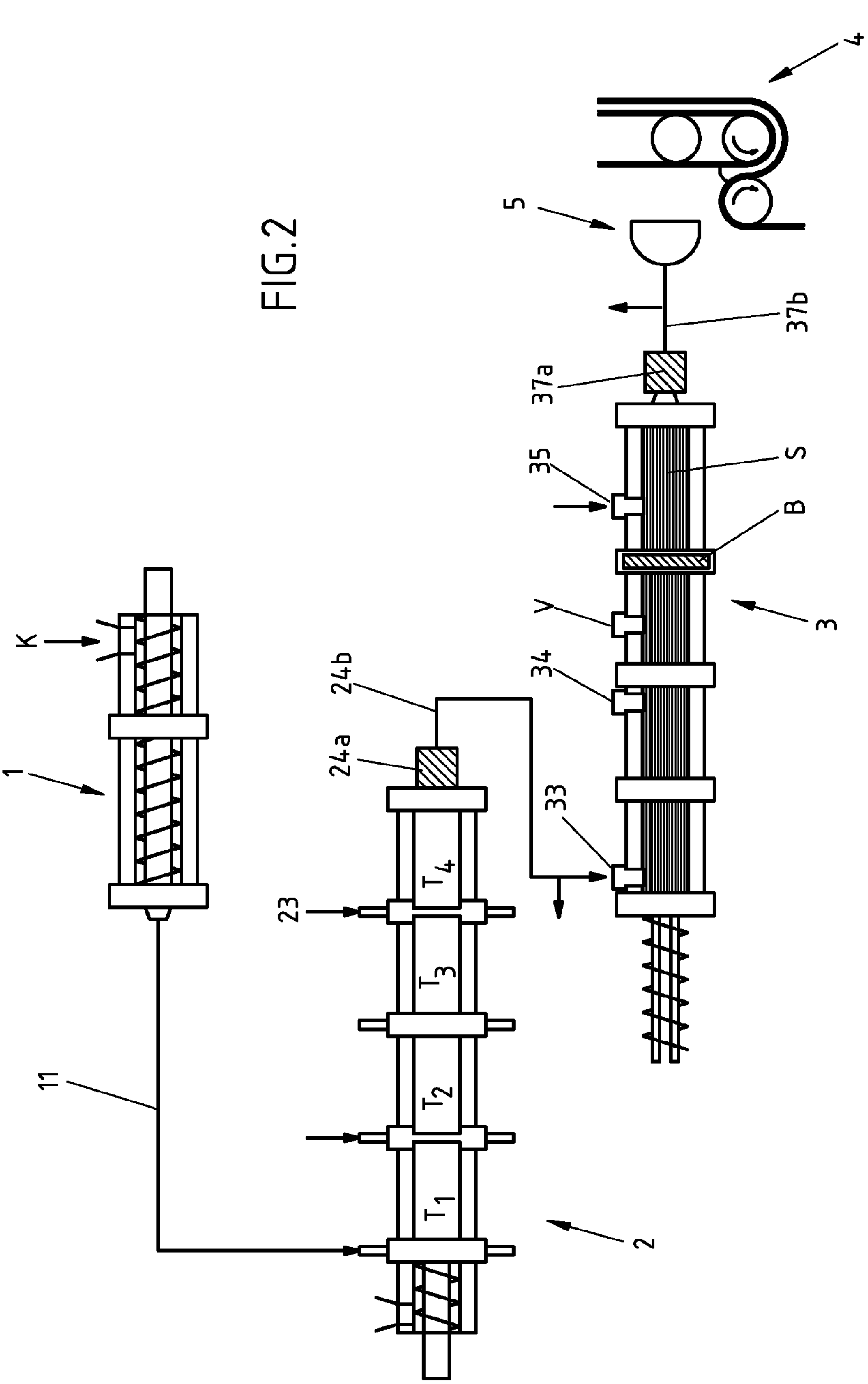

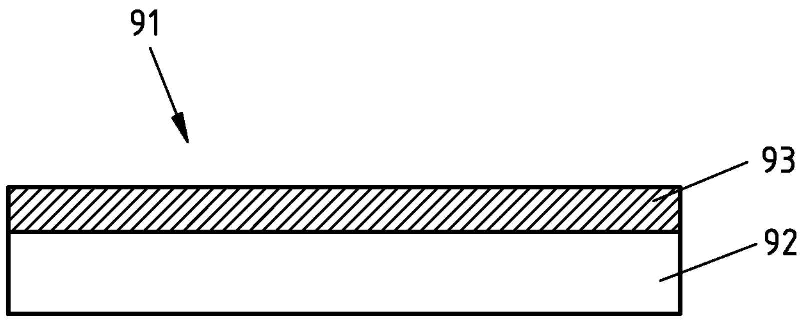


FIG.3

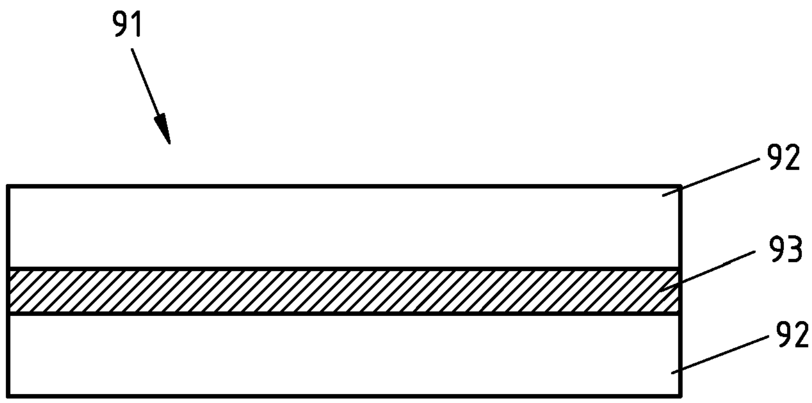


FIG.4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2008070386 A1
- US 6503621 A
- US 4415615 A
- EP 0349216 A1
- EP 0352901 A1
- US 6379791 A
- EP 2226369 A1
- US 20040299000 A1
- WO 9624620 A1
- WO 9844008 A1
- DE 19949352 A1
- US 5945491 A
- US 5854364 A
- US 5789487 A
- WO 9801478 A1
- WO 9931144 A1
- EP 0752435 A1
- EP 1978069 A1
- WO 2010112346 A1

### In der Beschreibung aufgeführte Nicht-Patentliteratur

- **D. SATAS.** Handbook of Pressure Sensitive Adhesives. 1989, 172
- Glossary of Terms Used in the Pressure Sensitive Tape Industry. August 1985
- **D. SATAS.** Handbook of Pressure Sensitive Adhesive Technology. 1989, 173
- **VON DONATAS SATAS.** Handbook of Pressure Sensitive Adhesive Technology. van Nostrand, 1989
- **T.G. FOX.** *Bull. Am. Phys. Soc.,* 1956, vol. 1, 123
- **HOUBEN-WEYL.** *Methoden der Organischen Chemie,* vol. E 19a, 60-147
- *Macromolecules,* 2000, vol. 33, 243-245
- *Polymer,* 1967, vol. 8, 381 ff